(19) Europäisches Patentamt
European Patent Office
Office européen des brevets

(11) EP 1 758 953 B1

# (12) EUROPEAN PATENT SPECIFICATION

(45) Date of publication and mention of the grant of the patent:
**28.09.2011 Bulletin 2011/39**

(21) Application number: **04754861.5**

(22) Date of filing: **10.06.2004**

(51) Int Cl.:
***C08J 9/26*** *(2006.01)* ***C08L 65/00*** *(2006.01)*

(86) International application number:
**PCT/US2004/018390**

(87) International publication number:
**WO 2006/001790 (05.01.2006 Gazette 2006/01)**

## (54) METHOD OF FORMING A NANOPOROUS DIELECTRIC FILM

VERFAHREN ZUR HERSTELLUNG EINES NANOPORÖSEN DIELEKTRISCHEN FILMS

PROCEDE DE PREPARATION D'UN FILM DIELECTRIQUE NANOPOREUX

(84) Designated Contracting States:
**AT BE BG CH CY CZ DE DK EE ES FI FR GB GR HU IE IT LI LU MC NL PL PT RO SE SI SK TR**

(43) Date of publication of application:
**07.03.2007 Bulletin 2007/10**

(73) Proprietor: **Dow Global Technologies LLC**
**Midland, MI 48674 (US)**

(72) Inventors:
- **NIU, Jason, Q.**
  **Midland, MI 48640 (US)**
- **HAHNFELD, Jerry, L.**
  **Midland, MI 48642 (US)**
- **LYONS, John, W.**
  **Midland, MI 48640 (US)**
- **SEDON, James, H.**
  **Midland, MI 48640 (US)**
- **SILVIS, Craig, H.**
  **Midland, MI 48642 (US)**

(74) Representative: **Polypatent**
**Postfach 40 02 43**
**51410 Bergisch Gladbach (DE)**

(56) References cited:
**EP-A- 1 260 991**
**WO-A-03/068825**
**US-B1- 6 630 520**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 758 953 B1

## Description

### Field of the Invention

This invention relates to formation of nanoporous, organic dielectric films for use in integrated circuit manufacture.

### Background of the Invention

As integrated circuit features become smaller with less distance between conductive lines, improved dielectric materials have been sought. Adding pores or voids to materials is known to lower the dielectric constant of the material. Thus, various approaches have been presented to attain pores.

Using compositions having thermosetting polymers in combination with thermolabile components has been one general approach. See e.g. U.S. 6,093,636; U.S. 6,630,520; U.S. 6,156,812; U.S. 6,172,128; U.S. 6,313,185; and U.S. 6,420,441. See also WO03/068825 and U.S. 2003/0006477.

Initial publications reveal a wide variety of potential thermosetting polymers and thermolabile components. For example U.S. 6,630,520 disclosed the possibility of either linear or cross-linked or particulate polymer morphologies as porogens. This patent reported actually attaining pore sizes on the order of 30 to 300 nm with linear polystyrene based porogens in a polyarylene matrix. Improvements were made by focusing on the template approach to porogens, using cross-linked polymeric nanoparticles, preferably with reactive groups - see e.g. WO 03/068825 - where average pore sizes on the order of about 10 to 30 nanometers were reported.

The industry still had a demand for yet smaller pore sizes with no occurrences of large "killer pores" that would create significant difficulties in integration using the porous films. Attaining these very small pore sizes with no "killer pores" was found to be more difficult with organic thermosetting polymer matrices than with inorganic, silsesquioxane based matrices.

### Summary of the Invention

Applicants have discovered a method for attaining very small pore sizes in polyarylene matrix materials. Specifically, this method comprises

forming a coating solution which comprises a matrix precursor material, a porogen material and a solvent, by selecting a polyarylene matrix precursor material which cross-links to form a matrix with a calculated cross-link moeity density of at least 0.003 moles/ml, and reacting the polyarylene matrix precursor material with a porogen which is linear oligomer or polymer which is formed from monomers comprising alkenyl or alkynyl functional monomers, which has reactive end groups and a weight average molecular weight in the range of less than about 5000, where the porogen is present in amounts in the range of about 10 to less than 50 percent by weight based on total weight of porogens and matrix precursor material,

applying the coating solution to a substrate and removing the solvent to form a film,

applying energy to the film to cross-link the matrix precursor material and remove the porogens to form pores with an average pore size of less than 4 nm.

### Detailed Description of the Invention

#### *The matrix and its precursor*

The matrix precursor material for use in this invention cures to form a highly cross-linked polyarylene. "Polyarylene" as used herein means polymers where backbone comprises primarily aryl groups - most preferably phenyl groups - but that may further comprise certain other organic groups or linking groups in the backbone. These other groups may be such things as oxygen (e.g. in the case of polyarylene ethers and the preferred polyarylenes set forth below), sulphur, sulfone, carbonyl, methylenes (such as methylene, dimethylmethylene, bis(trifluoromethyl)methylene, etc) and the like.

The inventors have found that there is a minimum calculated cross-link moeity density (XLMD) needed in the matrix material in order to support the very small pores obtained by this method. Specifically, the calculated cross-link moeity density (XLMD) should be at least 0.003 mol/ml, preferably at least 0.0035 mol/ml. The cross-link moeity density (XLMD) can be calculated as shown below in the equation.

$$XLMD = D\underline{EN} * \sum_{i=1}^{N} \frac{WF_i * (M_i - 2)}{Mw_i}$$

Where XLMD is the calculated crosslink moiety density. DEN is the density of the matrix (grams/centimeter$^3$);

i is an index which designates the different monomers of which the polymer is comprised (i.e. the monomers from which the polymer is made);

N is the total number of different monomer species of which the polymer is comprised

$WF_i$ is the weight fraction of the ith species of monomer among all monomers comprising the polymer;

$M_i$ is the number of reactive moieties on the ith kind of monomer. For example, the value of $M_i$ for the monomer of formula I is 6 (4 acetylene moieties + 2 cyclopentadienone moieties = 6 total moieties);

$Mw_i$ is the molecular weight of the ith species of monomer. The term ($M_i$ - 2) is used to express the idea that a collection of difunctional monomers undergoing inter-monomer one on one functional group reactions will not quite reach the gel point even at 100 percent conversion of all reactive moieties.

The crosslink moiety density (XLMD) is a calculated quantity that expresses the extent to which a polymer may crosslink if the crosslinking reactions are carried out to 100 percent conversion, without intra-chain cyclization reactions. It is obtained solely from the structure of the monomer units and the density of the monomer mix comprising the matrix material. As such it can be used to quickly assess the potential extent of crosslinking for a variety of monomer structures and mixtures of said structures.

Figure 1 shows the relationship between interparticle distance, D, and calculated cross-linked density, XLMD. Interparticle distance is used as an indicator of attainment of small pore sizes. The interparticle distance (D) is given by the formula below which includes the typical pore size (d), and the porosity (P) of the film. The formula is derived from a model constructed by placing identical spherical pores (with diameter d) on a cubic lattice so that the overall porosity is P. D is the smallest distance between two adjacent spheres on such a lattice.

$$D = d * \{(\pi / (6 * P))^{1/3} - 1\}$$

Figure 1 indicates that low molecular weight linear grafted porogen combined with the matrix polymer based on the monomer of formula I, provides a remarkably smaller interparticle distance (0.75 nm ( porosity~0.20 with pore diameter ~2 nm)) than can be obtained with the previously taught spherical crosslinked particulate porogens in the same matrix. This apparent advantage is a very surprising result and it does not hold true for matrix materials having lower calculated cross link moiety density (XLMD) values. In the case of matrix monomers with relatively low XLMD values, the use of low molecular weight linear grafted porogen results in a complete loss of porosity.

The porosity values used in the inter-particle distance equation (above) can be experimentally approximated from the refractive index of a porous film. The equation below provides a way to do this. In the equation $RI_{film}$ is the refractive index of the film, P is the porosity, $RI_{air}$ is the refractive index of air (1.00), and $RI_{matrix}$ is the refractive index of the solid matrix (1.63).

$$RI_{film} = P * RI_{air} + (1 - P) * RI_{matrix}$$

The pore size diameter (d) for use in the interparticle distance equation were experimentally obtained from SAXS data using a spherical model for the pore shape. The SAXS data and analysis provide a distribution of pore sizes,

and the pore diameter for use in the interparticle distance equation was picked as diameter corresponding to the peak of the differential form of the volume distribution of the pores vs. pore diameter.

The crosslink moiety density (XLMD) of the matrix required for a given application was empirically found to depend on the required porosity (P), the required diameter of the pores (d) (see the graph above and the interparticle distance equation), and the interaction of the porogen with the matrix during matrix cure and porogen pyrolysis.

It may be desirable in certain instances to characterize the extent of cross-linking (or network formation) by experimental methods rather than reliance on calculated crosslink moiety density. Thus, according to an alternative embodiment of this invention rather than requiring that the matrix material have a calculated cross-link moiety density of at least 0.003 moles/cc, a matrix material can be characterized by requiring that it have a Swell Index of less than about 1.3 after being cured at temperatures in the range when porogen bum out would begin to occur, preferably the Swell Index would be less than about 1.3 after cure at 130°C. A preferred method for calculating Swell Index is to coat a 0.5 to 1.0 micron film on an IR transparent substrate (IR grade silicon wafers work well). In an enclosed cell, the film is exposed to a vapor of a good solvent for the polymer - e.g. bromoform for polyarylenes, and one must wait until equilibrium occurs in the test sample/vapor. The IR spectrum of the unswollen film (i.e. before exposure to the solvent) is subtracted from the IR spectrum of the solvent swollen film. One must also subtract the spectrum of the vapor phase solvent in the empty enclosed cell. The resulting spectrum is a spectrum of the solvent in the film. One of the spectral peaks of the solvent in the film is integrated. In the case of bromoform swelling agent we use the infrared absorbance peak located near 1144 $cm^{-1}$. The resultant peak area (A) is transformed into an effective thickness of swelling solvent in the film ($T_s$) by multiplying by a constant (K), and the swelling index value (SI) is calculated from this effective thickness and the original film thickness ($T_0$) as set forth below. The value of K is obtained by integrating the peak of interest for an enclosed liquid film of known thickness so as to obtain a peak area, and dividing the liquid film thickness by the peak area.

$$T_s = K * A$$

$$SI = \frac{(T_s + T_0)}{T_0}$$

Thus, as shown in Fig. 2 one can characterize the extent of matrix crosslinking as a function of cure conditions. It is important to properly match the cure profile of the matrix with the porogen weight loss profile. Using porogens with low thermal stability, so that the porogen pyrolyzes to gaseous products well before the matrix fully cures, results in non-porous films. Fig. 2 shows profiles of swelling index as a function of highest cure temperature for two different matrix materials only the lower curve represents matrices within the scope of the present invention.

The preferred polyarylene matrix precursors are monomers having dienophile, and diene functional groups or oligomers thereof. Aromatic acetylene and cyclopentadienone functional groups are preferred. Among suitable monomers useful as matrix precursors or useful in making oligomeric matrix precursors are

Formula I:

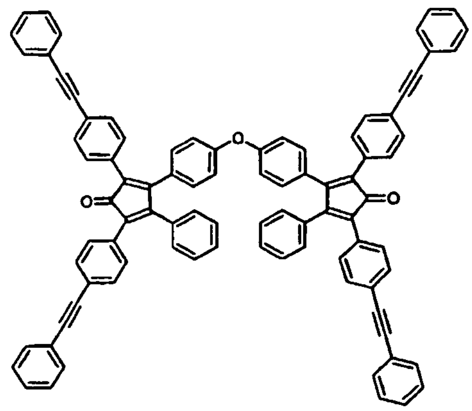

Formula II:

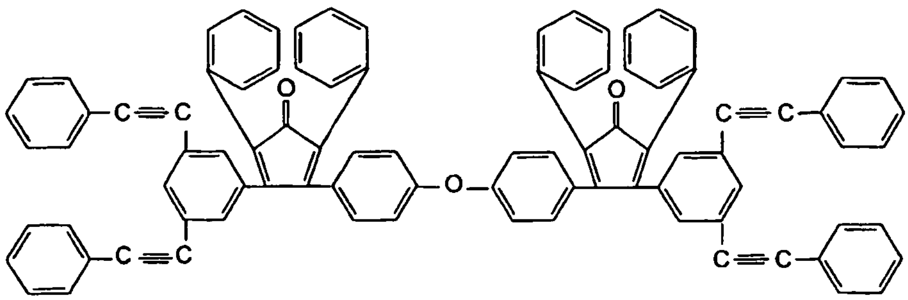

Formula III:

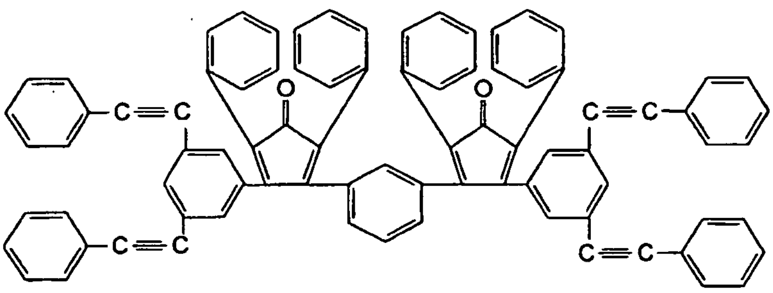

Formula IV:

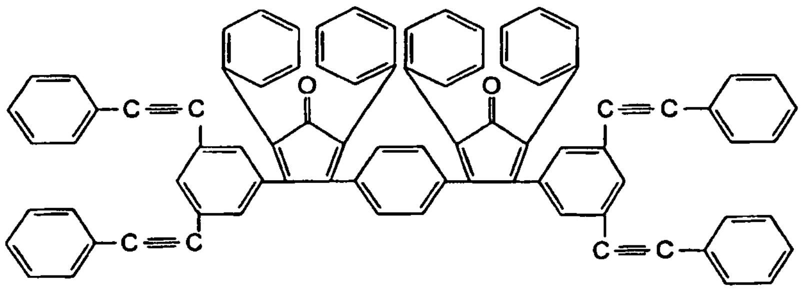

Formula V:

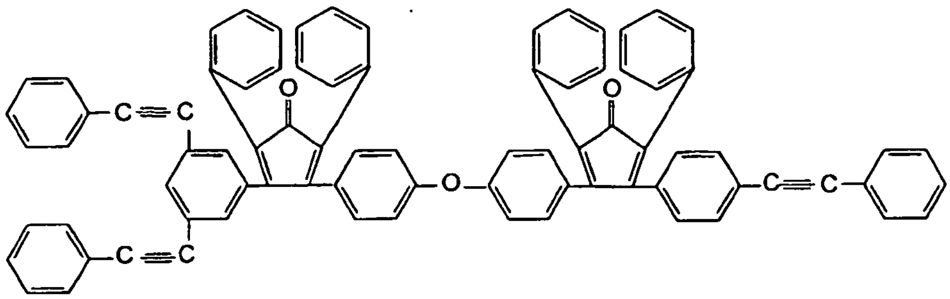

Formula VI:

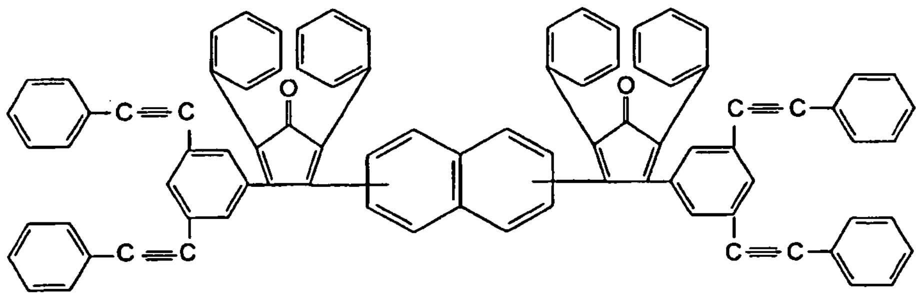

Formula VII:

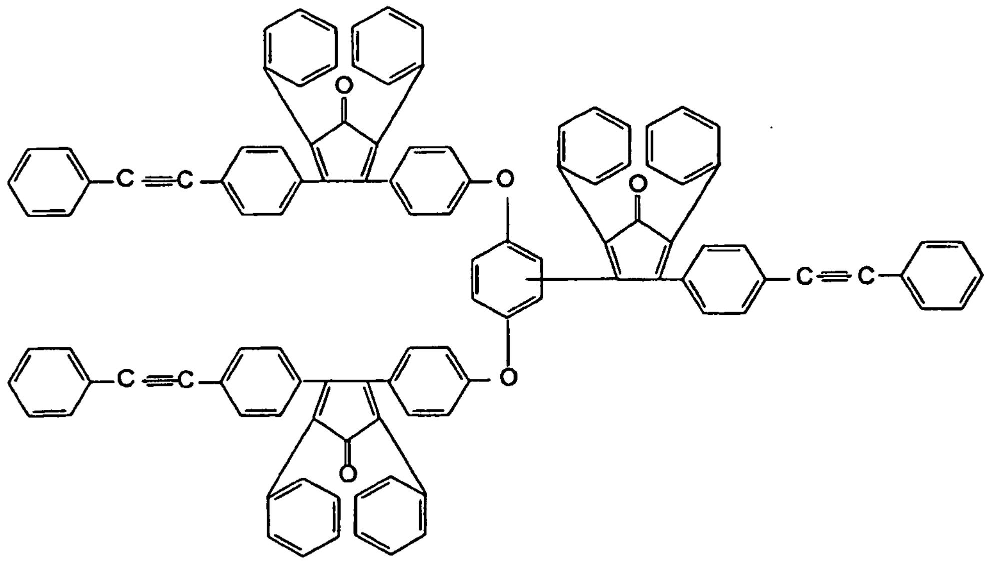

Formula VIII (a mixture of):

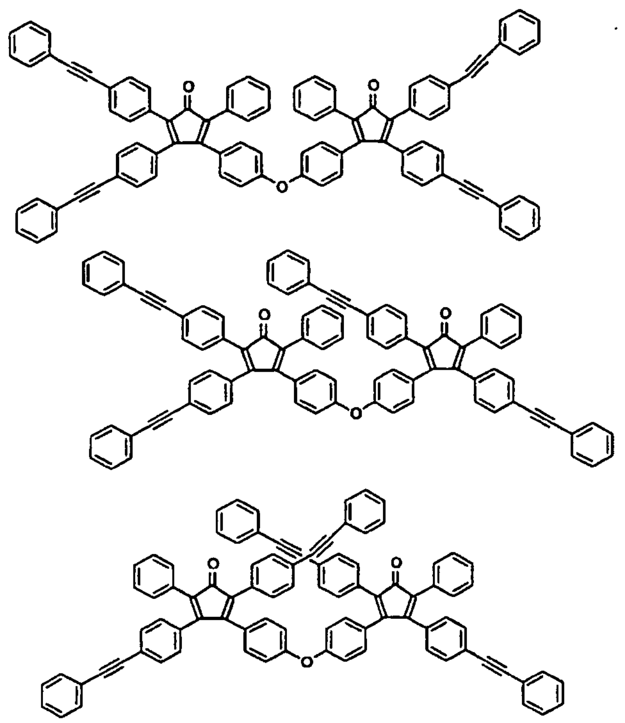

Formula IX (a mixture of):

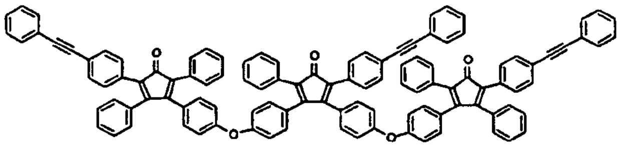

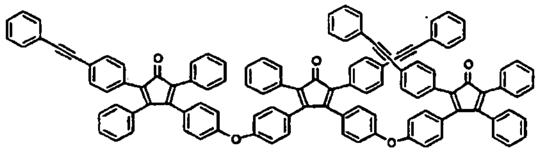

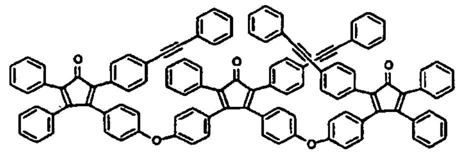

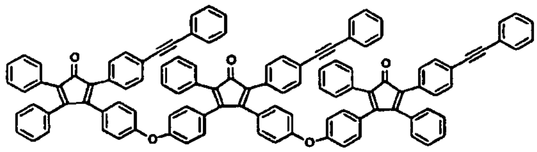

Formula X (a mixture of):

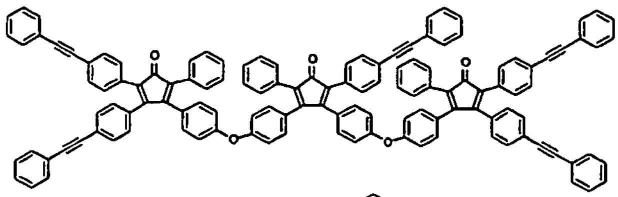

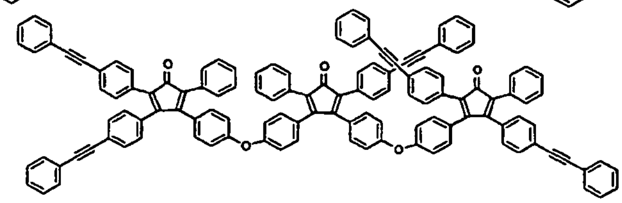

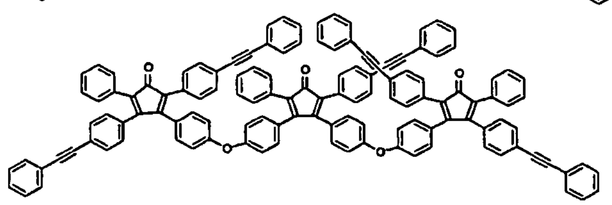

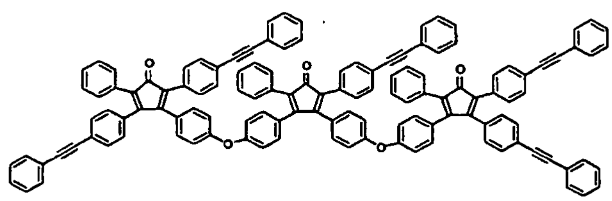

Formula XI:

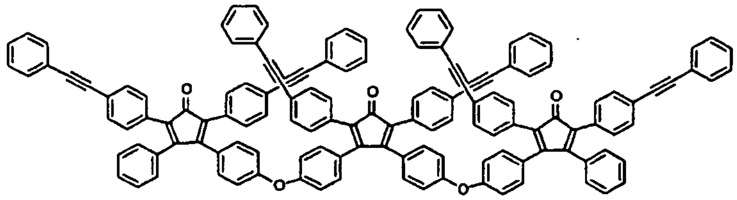

Formula XII:

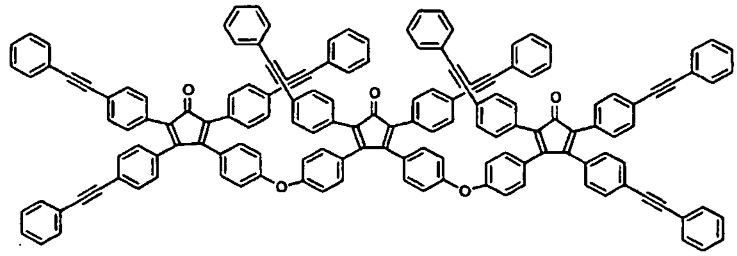

Formula XIII:

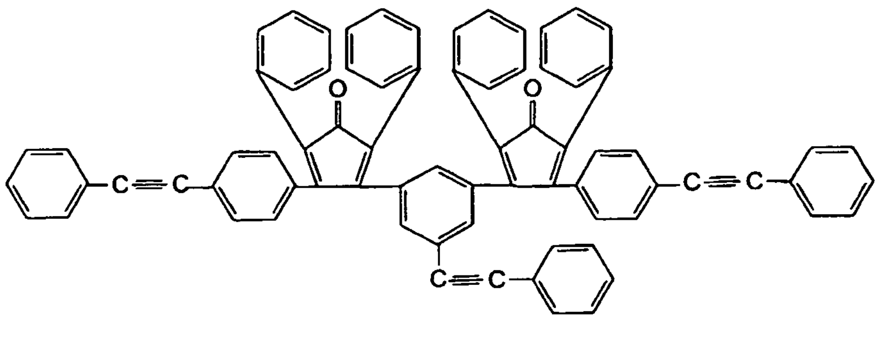

Formula XIV:

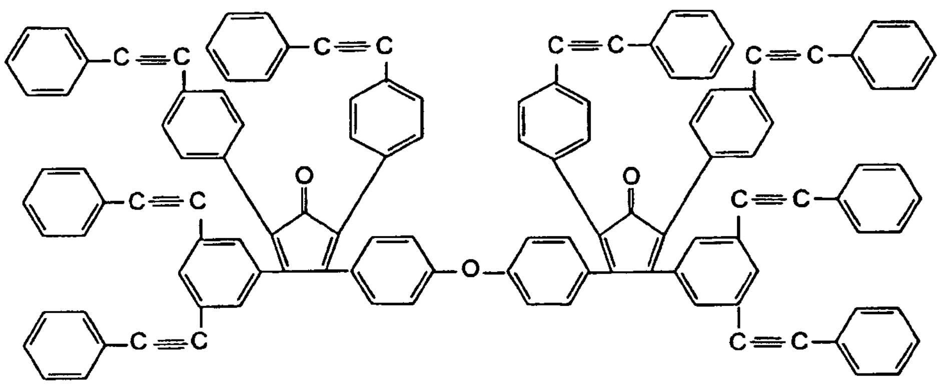

Formula XV

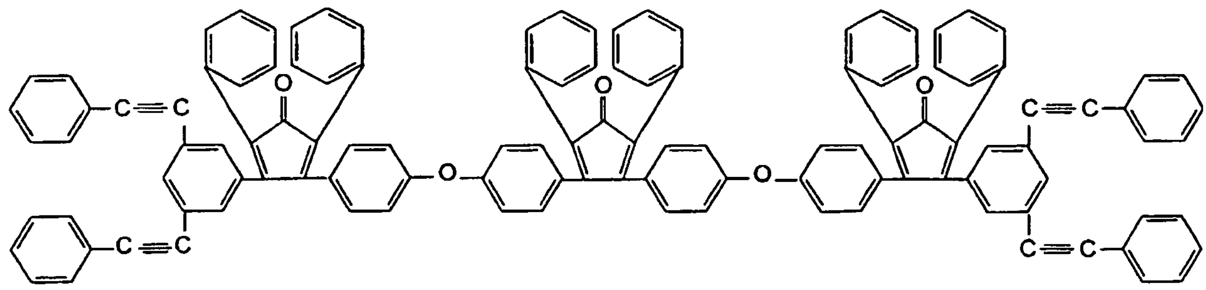

Formula XVI (Left) and XVII (Right):

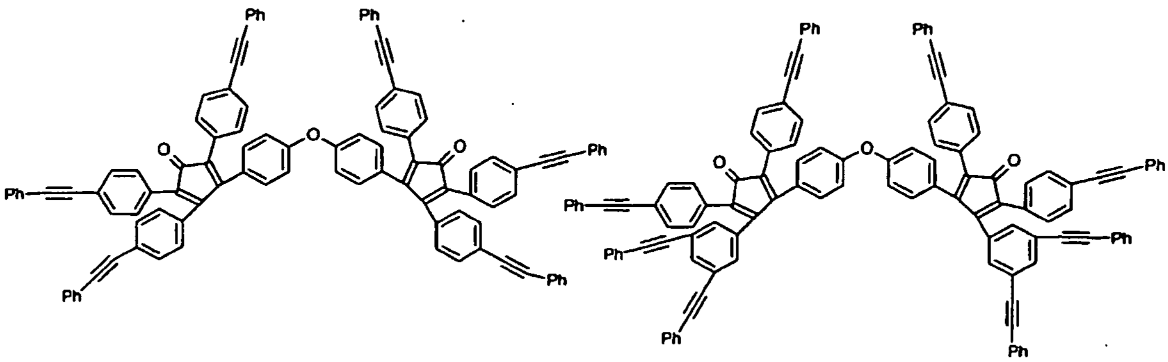

Other monomers which do not react by Diels-Alder chemistry but which would provide the desired calculated cross-link density or Swell Index may also be used. For example, substituted or unsubstituted tris-acetylene functional monomers may be useful.

The most preferred matrix precursors are compositions made by b-staging (i.e. partially polymerizing) the monomer of Formula I to weight average molecular weights of about 4000 g/mole, preferably 7000 g/mole, more preferably 10,000 g/mole, when measured via size exclusion chromatography with polystyrene calibration. The b-staging may occur at temperatures between about 160°C and about 200°C_for times of about 4 to 60 hours. Preferably, B-staging occurs in a solvent such as, for example, mesitylene, methyl benzoate, ethyl benzoate, dibenzylether, diglyme, triglyme, diethylene glycol ether, diethylene glycol methyl ether, dipropylene glycol methyl ether, dipropylene glycol dimethyl ether, propylene glycol methyl ether, dipropylene glycol monomethyl ether acetate, propylene carbonate, diphenyl ether, cyclohexanone, butyrolactone and mixtures thereof. The preferred solvents are mesitylene, gamma-butyrolactone, cyclohexanone, diphenyl ether, ethyl ethoxypropionate and mixtures of two or more of such solvents.

The above monomers can be made by the methods set forth in WO 03/068825 or as exemplified herein.

*The porogens*

"Porogen" as used herein means a labile component which can be removed from the matrix film when energy is applied to the film to leave small voids or pores. The energy is preferably supplied by heating and the porogen is preferably thermally labile, but may alternatively be supplied in the form of e-beam or UV radiation. The porogens are characterized in that they are not removed until sufficient cure has occurred in the matrix material such that no pore collapse occurs. Specifically, it is desired for the preferred thermally cured systems that the porogen removal (i.e., burnout) temperature be slightly higher than the temperature used for cure of the matrix polymer. Since for the preferred matrix materials onset of significant rate of cure reactions begin in the range of 200 to 350°C, porogens burn-out temperatures are preferably in the range of about 325, more preferably 340 to about 400°C.

The porogens useful in this invention are low molecular weight substantially linear polymeric or oligomeric species having a reactive end group with the polymer chain consisting essentially of alkenyl functional and/or alkynyl functional monomers. The monomers may be aliphatic and/or aromatic but are more preferably aromatic. By substantially

linear is meant that the polymer or oligomer species contain little or preferably no branching and no cross-linking.

The weight average molecular weight of these materials is less than or equal to 5000, preferably less than 4000, preferably less than 3500, more preferably less than 3000, most preferably 2000 or less and preferably at least 500, more preferably at least 1000. Preferably, the polydispersity is very low - preferably less than 1.5, more preferably less than 1.2, more preferably still less than about 1.1

The alkenyl or alkynyl monomers used in making the porogens may be selected from styrene, alkyl substituted styrenes, such as vinyltoluene, 4-methylstyrene, dimethylstyrenes, trimethylstyrenes, tert-butylstyrene, ethylvinylbenzene, vinylxylenes, and the like; aryl-substituted styrenes, such as phenylstyrene, 4-benzoylstyrene, and the like; alkylaryl-substituted styrenes; arylalkynyl alkyl-substituted styrenes; 4-phenylethynylstyrene, phenoxy-, alkoxy-, carboxy-, hydroxy-, or alkyloyl- and aroyl-substituted styrenes; higher aromatics, such as vinylnaphthalene, vinylanthracene; stilbene; beta- substituted vinyl aromatic monomers such as beta-methylstyrene, beta-carboxymethylstyrene, and the like; and substituted versions thereof. Styrene and alkyl substituted styrenes, particularly alpha methyl styrene are preferred. The monomer may simply be styrene, or according to a preferred embodiment, in order to adjust and tune the pore formation temperature (i.e. burn-out temperature) a combination of styrene with alpha methyl styrene may be used. According to this preferred embodiment the polymer chain (excluding the reactive functional end group) comprises 20 to 100 mole percent styrene and 0 to 80 mole percent alpha methyl styrene. More, preferably, to get a burn-out temperature of about 350°C 20-40 percent is styrene monomer is used with 60-80 percent alpha methyl styrene. If more than 80 percent alpha methyl styrene is used, the porogen is removed too soon and the film becomes dense from pore collapse.

Suitable aliphatic monomers include such monomers as methylmethacrylate to form polymethylmethacrylate (PMMA), methylacrylate to form polymethacylate (PMA), t-butyl acrylate to form poly (t-butyl acrylate), n-butyl acrylate to form poly (n-butyl acrylate), ethyl acrylate to form poly (ethyl acrylate), t-butyl methacrylate to form poly (t-butyl methacrylate), n-butyl methacrylate to form poly (n-butyl methacrylate), ethyl methacrylate to form poly (ethyl methacrylate), ethylene oxide to form polyethylene oxide (PEO) propylene oxide to from polypropylene oxide (PPO), lactide to form polylactide (PLA), caprolactone to form polycaprolactone, tetrahydrofuran to form polytetrahedrofuran and the copolymers therefrom.

The reactive group is a terminal (i.e. end) group which allows the porogen to react with the matrix precursor material. The presence of the reactive group is key to avoiding too much agglomeration of the porogens which has been found to occur and cause large pores. Although desirable it is not absolutely required that each porogen oligomer chain include the reactive functional group. Preferably, at least 30 percent of the chains include the reactive group, more preferably at least 60 percent of the chains include a reactive group, more preferably still at least 90 percent of the chains include a reactive group, more preferably still at least 95 percent of the chains include a reactive group and most preferably at least 99 percent of the chains include a reactive group. The reactive group is preferably a group which can participate in the diels alder reaction during b-staging or cure of the polyarylene matrix precursor material. Examples of suitable terminal reactive groups include acrylates and methacrylates, styrenics,_allyls, acetylenes, phenylacetylenes, alkenyls, cyano, pyrone, etc., specifically preferred are styrenic, acrylate and methacyylate.

These porogens species may be made by any known method such as anonic polymerization, free radical polymerization, controlled free radical polymerization (nitroxide mediated or atom transfer free radical polymerization, and are commercially available, for example, from Scientific Polymer Products (SP2) Inc., Ontario, New York.

*Forming the coating solution*

The coating solution is formed by combining the porogens and the matrix precursor in a suitable solvent system. Preferably the porogens are added to monomeric matrix precursor which is then b-staged (i.e. partially polymerized) as discussed above to form an oligomeric or polymeric matrix precursor as discussed above. Performing the b-staging in the presence of the porogen enables the reactive terminal group on the porogens to react with the matrix precursor and become bonded to the matrix precursor. This helps avoid agglomeration of the matrix precursor. Alternately, the porogen could be added to already b-staged matrix precursor provided that at some time during the processing but prior to coating a step of reacting the porogens with the matrix precursor occurs.

The amount of porogen is preferably in at least 20 percent by weight based on weight of porogen and matrix precursor, more preferably at least 30 percent. The efficiency (i.e. the conversion of porogens to pores) of the porogen reaches a plateau at somewhat less than 50 percent loading. Preferably the amount of porogens is no greater than 45 percent, more preferably no greater than 40 percent.

Suitable solvents include mesitylene, methyl benzoate, ethyl benzoate, dibenzylether, diglyme, triglyme, diethylene glycol ether, diethylene glycol methyl ether, dipropylene glycol methyl ether, dipropylene glycol dimethyl ether, propylene glycol methyl ether, dipropylene glycol monomethyl ether acetate, propylene carbonate, diphenyl ether, cyclohexanone, butyrolactone and mixtures thereof. The preferred solvents are mesitylene, gamma-butyrolactone, cyclohexanone, diphenyl ether, ethyl ethoxypropionate and mixtures of two or more of such solvents.

The coating solution preferably comprises 75-95 percent by weight solvent and 5-25 percent "solids". By "solids"

is meant the matrix precursor, porogens, and any other additive which is intended to become part of the coated film after solvent removal. The precise concentration used will vary based on desired coating thickness of the final film.

The solution is applied to a substrate on which the porous polymeric film is desired to be formed. Preferably, based on the low thicknesses desired (preferably in the range of less than about 300 nm, more preferably about 50 to 300 nm) spin coating techniques are used. However, other solvent coating approaches, such as ink jet printing, and the like may also be used. The solvent is removed by drying. Optionally, the solvent may be removed at slightly elevated temperatures in the range of preferably less than 200, more preferably less than 150°C to remove the solvent without significantly advancing the cure. Typically, this heating step would occur on a hot plate or similar heating device.

Alternatively, heating to higher temperatures will both remove the solvent and advance the cure of the resin. Multi-step cures on hotplates may be used if desired particularly if additional solvent coated layers are going to be applied and the layer needs to cure to resist the solvent for the next layer, but full cure and burn-out of the porogens is not desired. An important advantage of the presently claimed system is that it is more robust and less sensitive to hot plate heating sequence. Unlike prior systems where multiple heating steps were required to avoid pore size increases, the present system can be heated on a hotplate to 400°C without significant impact on pore size in the film.

Cure and porogens removal is brought about by supplying energy to the coated film. While this is preferably, conveniently done by heating, it is contemplated that other energy sources such as e-beam cure or UV radiation could also be used. Heating to cure may occur on a hot plate, in an oven or furnace or in a combination of these steps. Cure temperature is preferably in the range of about 250 to about 450°C. Cure preferably occurs in an inert atmosphere so as to avoid undesirable oxidation of the matrix material. The higher temperatures - greater than about 325°C, preferably about 340 to about 400°C are also effective in burn-out (i.e. thermal removal) of the porogens material. This burn-out preferably occurs in an oven or furnace in an inert atmosphere at temperatures of about 325 to about 450, preferably 325 to 400°C for times of about 10 minutes to 2 hours. However, the addition of oxygen may speed the removal of the porogens and shorten the burnout time.

The coating solutions of this invention, particularly when the weight average molecular weight of the matrix precursor is in the range of 5000 to about 20000, when measured via size exclusion chromatography with polystyrene calibration, show excellent gap fill properties when spin coated. Specifically, 0.1 micron gaps with aspect ratios of 2:1 (depth:width) are filled by matrix precursors having molecular weights of about 5000 to more than 30,000, while 0.25 micron gaps with aspect ratios of 7:1 are completed filled by matrix precursors having molecular weights of about 5000 to about 20,000.

The films formed by this method have average pore size of about 0.5 to 4 nm, with a narrow pore size distribution and substantially no pores having a dimension greater than 5 nm. Pore size can advantageously be determined by small angle x-ray scattering as follows: Small angle x-ray scattering (SAXS) experiments may be performed using a standard Advanced Photon Source (APS) x-ray source. A monochromatic beam passes through a vacuum chamber which houses a series (3 sets) of slits to define a rectangular shaped beam of known size. The beam then exits the vacuum chamber and passes through air followed by a helium filled chamber prior to entering the path to the sample again in a vacuum sample chamber. An additional pinhole is added approximately 10cm before the sample position. This collimator is used to block any of the parasitic background rays caused by leakage around the outside limits of the optical components further up the beamline.

The SAXS experiments are performed on double polished silicon wafers (~100-700 $\mu$m thick) coated with ~0.1-1$\mu$m thick sample. A normal beam transmission mode geometry is employed. The x-ray energy is set between 15-18 keV. Data collection times are set at 10 minutes. A charge coupled device (CCD) detector is used to collect the x-ray scattering from the sample. A separate background file is collected and subtracted from all of the sample data sets. Corrected data is reduced to a one dimensional data set (intensity versus scattering vector, q, where $q = 4\pi\sin\theta/\lambda$; $\theta$ = half of the angle of scattering, $2\theta$; $\lambda$ = wavelength of radiation) by radially integrating the two dimensional data set. The reduced data set is used to determine the pore size distribution and average pore diameter.

Two different methods are used to generate the average pore size and pore size distribution from the corrected scattering data -- Indirect Fourier Transformation method for concentrated systems developed by Glatter et al. (see Brunner-Popela, J. and Glatter, O., J. Applied Cryst., (1997) 30,431-442 or Weyerich, B., Brunner-Popela, J., Glatter, O. J. Applied Cryst., (1999), 32, 197-209) and the local monodisperse approximation developed by Pederson (see Pederson, J. S. J. Appl. Cryst. 27, 595, (1994)).

Alternatively, positron annihilation lifetime spectroscopy (PALS) can be used to determine pore sizes. Due to the very small pores being formed, use of transmission electron microscopy is somewhat more difficult, but can be used to detect pore sizes in excess of 2 nm.

*Miscellaneous*

The porous films made by the above method have several beneficial features. Notably, the claimed method attains substantially closed cell (unconnected cells) pore morphology despite the very small pore size. In addition, the

very small pore size provides for low surface roughness - Rq on the order of less than 1 nm as determined by tapping made AFM (atomic force microscopy). Furthermore, the small pore size yields low sidewall roughness in trenches and vias after etch which in turn enables formation of barrier layers in the feature that prevent migration of metals into the dielectric film. Earlier porous films, even with 10 nm pores, proved more difficult to integrate due to the inadequate barrier layer integrity due to sidewall roughness.

Another beneficial feature of the higher cross-link polyarylene materials, including the preferred embodiment, is that they yield films (porous or non-porous) that have low variation of coefficient of thermal expansion over the relevant temperature range of 50 to about 450, preferably about 420, more preferably about 400°C. The preferred films made by the process claimed have coefficients of thermal expansion over the range of 100 to 400°C in the range of 30 to 60 ppm/°C, more preferably 40 to 50 ppm/°C.

Brief Description of the Drawings

Fig. 1 shows a plot of the relationship between interparticle distance (an indicator of pore size) and calculated cross link moiety density.

Fig. 2 shows a plot of the relationship of swelling to cure temperature for two matrices having different calculated cross-link moiety densities.

Examples

Example 1 - Method of making monomer of Formula I

A. SYNTHESIS OF ETHYL 4-BROMOPHENYLACETATE

A solution of 63 grams (0.29 mole) of 4-bromophenyl acetic acid and 50 milliliters of concentrated sulfuric acid in 500 milliliters of absolute ethanol was refluxed for 8 hours then allowed to stand overnight. After pouring over 600 grams of ice, the mixture was extracted with ether/hexanes. The ether extracts were washed thoroughly with water and sodium bicarbonate solution then dried over anhydrous sodium sulfate. Removal of the solvent by rotary evaporation yielded 57 grams (0.24 mole, 80 percent isolated yield) of an oil which crystallized upon cooling. Filtration and washing with hexane afforded pure product.

B. SYNTHESIS OF 1,3-BIS(4-BROMOPHENYL)-2-PROPANONE

To a slurry of sodium hydride (9.17 grams, 0.23 mole) in 50 milliliters of toluene was added dropwise, a solution of ethyl 4-bromophenylacetate (50 grams, 0.21 mole) in toluene (50 milliliters) at 30-32°C. After addition was completed, the reaction mixture was slowly warmed to 50°C where the reaction began to rapidly exotherm with evolution of hydrogen gas. The reaction mixture was further heated to 78°C for 2 hours, cooled to room temperature and then hydrochloric acid (45 grams) in water (22.5 grams) was slowly added dropwise to neutralize the solution. The layers were separated and the aqueous phase was extracted with diethylether. The combined organic extracts were dried and the solvent was removed to leave a yellow oil. This oil was refluxed for 24 hours in a mixture of glacial acid (60 milliliters) and concentrated HCl (30 milliliters). After cooling, the layers were separated, and the organic layer solidified to provide a yellow solid. This crude product was recrystallized from n-heptane to give a pure product as a white solid (31.2 grams, 82 percent isolated yield).

C. SYNTHESIS OF 1,3-BIS(4-PHENYLETHYNYLPHENYL)-2-PROPANONE

In a 250 ml flask was placed 18.4 grams (0.05 mole) of 1,3-bis-(4-bromophenylphenyl)-2-propanone, 24 grams (0.24 mole) of triethylamine, 12 grams (0.12 mole) of phenylacetylene, and 60 milliliters of N, N-dimethylformamide. The reaction mixture was purged with nitrogen for 15 minutes then 0.60 gram (0.0023 mole) of triphenylphosphine and 0.08 gram (0.00036 mole) of palladium acetate were added. After heating the reaction mixture at 80°C under a nitrogen atmosphere for 20 hours, the flask was allowed to cool to room temperature, then water (200 milliliters) and toluene (200 milliliters) were added. The resulting organic layer was washed with 10 percent aqueous HCl, water and saturated aqueous NaCl then dried over anhydrous $Na_2SO_4$. The pure product (14.5 grams) was obtained upon removal of the toluene and recrystallization from toluene/hexanes in 71 percent isolated yield.

D. SYNTHESIS OF MONOMER OF FORMULA I

4,4'-bis(Phenylglyoxalyl)phenyl ether (3.24 grams, 0.0075 mole) and 6.78 grams (0.0165 mole) of 1,3-bis(4-phenylethynylphenyl)-2-propanone from 1C. above were added to a reactor containing 45 milliliters of anhydrous toluene and 45 ml of anhydrous 2-propanol. Stirring and heating commenced, and once the suspension reached 80°C temperature, a solution of tetrabutylammonium hydroxide (1 M in MeOH, 0.75 milliliter) diluted with 24 milliliter of 2-propanol was added dropwise during a period of 30 minutes, immediately inducing a deep red purple color. After maintaining at 80°C for 1 hour, HPLC analysis indicated that full conversion of the 4,4'-bis(phenylgloxalyl)phenyl ether reactant had been achieved. At this time, the oil bath was removed from the reactor, and the reaction mixture was allowed to cool to room temperature. The product was recovered via filtration through a medium fritted glass funnel and washed with plenty of 2-propanol. Yield, 7.8g (85 percent) with the 91 area percent purity.

**2. Recrystallization of Monomer of Formula I**

Ten (10) grams of crude monomer of Formula I with 84 area percent was dissolved in 100 ml toluene in a hot water bath (about 80-90°C). Then antisolvent 1-propanol 100 - 120 ml was added then set at room temperature for about 2 hours, and then put in freezer for another 1 or 2 hours. Filtered and washed by 1-propanol until the filtration solution becomes colorless to give very fine powdered monomer of Formula I with 93 area percent and 8.2 gram after dry. Second recrystallization with very same procedure here improved the product purity from 91 area percent to 98 area percent.

The calculated cross-link moiety density for polymers made from this monomer is 0.0035 moles/ml.

Example 2 - Method of making Monomer of Formula XVI

A. SYNTHESIS OF 4-BROMOPHENYLACETYL CHLORIDE

4-Bromophenylacetic acid (99.5 grams, 0.46 mole) and N,N-dimethylformamide (2 milliliters) were added under a dry nitrogen atmosphere to a predried one liter glass single neck round bottom Schlenk reactor containing a predried magnetic stirring bar. After sealing under dry nitrogen, the reactor was placed on a Schlenk line under slightly positive nitrogen pressure. Thionyl chloride (300 milliliters) was added under a dry nitrogen atmosphere to a predried glass addition funnel which was outfitted with a Schlenk adaptor, then sealed under dry nitrogen and placed on the Schlenk line. The reactor and addition funnel were coupled under dynamic nitrogen flow, after which all thionyl chloride was added to the stirred reactor. Nitrogen flow was maintained into the Schlenk reactor, while gas from the reaction vented through the Schlenk adaptor on the addition funnel and into a scrubber system. Using a thermostatically controlled heating mantle, the reactor contents were gently heated to 60°C and held therein for 2.5 hours. After completion of this post reaction, the excess thionyl chloride was stripped from the product by applying vacuum from the Schlenk manifold until 60°C and 159 microns was achieved. The resulting 4-bromophenylacetyl chloride product (105.95 grams, 98.1 percent isolated yield) was maintained under dry nitrogen until use.

B. SYNTHESIS OF 4,4'-BIS[4-BROMOPHENYL)ACETYL]PHENYL ETHER

Diphenyl ether (38.61 grams, 0.227 mole), aluminum chloride (60.53 grams, 0.454 mole) and anhydrous dichloromethane (250 milliliters) were added under a dry nitrogen atmosphere to a predried one liter glass single neck round bottom Schlenk reactor containing a predried magnetic stirring bar. After sealing under dry nitrogen, the reactor was placed on a Schlenk line under slightly positive nitrogen pressure. An ice bath was then placed under the reactor. 4-Bromophenylacetyl chloride (105.95 grams, 0.454 mole) from A. above dissolved in dichloromethane (100 milliliters) was added under a dry nitrogen atmosphere to a predried glass addition funnel which was outfitted with a Schlenk adaptor, then sealed under dry nitrogen and placed on the Schlenk line. The reactor and addition funnel were coupled under dynamic nitrogen flow, then the 4-bromophenylacetyl chloride solution was added dropwise to the stirred reactor over a 3 hour period. After 2 hours of post reaction, the reactor was removed from the Schlenk line and the contents poured over cracked ice contained in a beaker. After complete melting of the ice, the precipitated product was dissolved into dichloromethane (14 liters) with the water layer removed using a separatory funnel. The dichloromethane solution was washed with deionized water (2 liters), then dried over anhydrous sodium sulfate. The resulting slurry was filtered through a medium fritted glass funnel, then the dry filtrate was passed through a column of silica gel, using additional dichloromethane (2 liters), as needed. The dichloromethane solution was rotary evaporated to dryness, giving 119.1 grams of white powder. High pressure liquid chromatographic (HPLC) analysis revealed the presence of the desired product at 94 area percent accompanied by a single coproduct present at 6 area percent. Recrystallization from boiling acetonitrile (14 liters) was completed (allowed to cool to room temperature and held therein for 16 hours) to provide 96.0 grams (75.0 percent isolated yield) of 4,4'-bis[4-bromophenyl)acetyl]phenyl ether as shimmering white platelike crystals

with the HPLC analysis demonstrating complete removal of the coproduct (100 area percent product). $^1H$ Nuclear magnetic resonance (NMR) analysis confirmed the structure of the product.

C. SYNTHESIS OF 4,4'-BIS[4-BROMOPHENYL)GLYOXALYL]PHENYL ETHER

4,4'-bis[4-Bromophenyl)acetyl]phenyl ether (95.5 grams, 0.169 mole) from B. above and dimethylsulfoxide (1.8 liters) were added to a two liter glass three neck round bottom reactor outfitted with a glass mechanical stirring rod with teflon paddles. The reactor was additionally outfitted with a chilled (2°C) condenser and a thermometer with thermostatically controlled heating mantle. Aqueous 48 percent hydrobromic acid (199.7 grams) was added as a stream over a 3 minute period to the stirred slurry in the reactor, inducing an exotherm to 45°C. Heating to 100°C then commenced, with the formation of a clear light orange colored solution noted once 92°C was achieved. After 2 hours at the 100°C reaction temperature, the hot product solution was diluted into 8.2 liters of toluene followed by washing of the toluene solution five times with 1.6 liter portions of deionized water. The washed toluene solution was rotary evaporated to dryness, giving 99.2 grams (99.1 percent isolated yield) of light yellow colored powder. High pressure liquid chromatographic (HPLC) analysis revealed the presence of the desired product at 100 area percent. $^1H$ Nuclear magnetic resonance (NMR) analysis confirmed the structure of the product.

D. SYNTHESIS OF 4,4'-BIS[(4-PHENYLETHYNYL)GLYOXALYL]PHENYL ETHER

4,4'-bis[(4-Bromophenyl)glyoxalyl]phenyl ether (99.2 grams, 0.1675 mole) from C. above, phenylacetylene (41.37 grams, 0.405 mole), triethylamine (92.5 grams, 0.914 mole), triphenylphosphine (2.22 grams, 0.00847 mole, palladium (II) acetate (0.31 gram, 0.00137 mole) and N,N-dimethylformamide (1063 milliliters), which had been sparged with dry nitrogen, were added under a dry nitrogen atmosphere to a predried two liter glass three neck round bottom reactor containing a predried magnetic stirring bar. The reactor was additionally outfitted with fan cooled spiral condenser and a thermometer with thermostatically controlled heating mantle. Stirring and heating commenced, and after 13 minutes, when a temperature of 45°C was achieved, a clear light yellow colored solution formed. After a cumulative 1.2 hours, a temperature of 80°C was achieved and maintained for the next 14.7 hours. At this time, HPLC analysis indicated that full conversion of the 4,4'-bis[4-bromophenyl)glyoxalyl]phenyl ether reactant had been achieved. The reactor contents were poured over cracked ice contained in a pair of 4 liter beakers. After complete melting of the ice, the precipitated product was recovered via filtration through a medium fritted glass funnel. The product cake on the funnel was washed with two 500 milliliter portions of deionized water, then directly recrystallized, as a damp product, from boiling acetonitrile (22.5 liters). The recrystallization solution was allowed to cool to room temperature and held therein for 16 hours to provide 92.2 grams (86.7 percent isolated yield) of 4,4'-bis[4-phenylethynyl)glyoxalyl]phenyl ether as a light yellow crystalline product. HPLC analysis revealed the presence of the desired product at 100 area percent. $^1H$ Nuclear Magnetic resonance (NMR) analysis and electron ionization mass spectroscopic analysis (EI MS) both confirmed the structure of the product.

E. SYNTHESIS OF MONOMER OF FORMULA XVI

1.59 g of 4,4'-bis[(4-phenylethynyl)glyoxalyl]phenyl ether from 3D (0.0025 mole) and 2.26 grams (0.0055 mole) of 1,3-bis(4-phenylethynylphenyl)-2-propanone from 1C were added to a reactor containing 15 milliliters of anhydrous toluene and 15 ml of anhydrous 2-propanol. Stirring and heating commenced, and once the suspension reached 80°C temperature, a solution of tetrabutylammonium hydroxide (1 M in MeOH, 0.25 milliliter) diluted with 8.0 milliliter of 2-propanol was added dropwise during a period of 30 minutes, immediately inducing a deep green color. After maintaining at 80°C for 1 hour, HPLC analysis indicated that full conversion of the limited reactant had been achieved. At this time, the oil bath was removed from the reactor, and the reaction mixture was allowed to cool to room temperature. The product was recovered as a green powder via filtration through a medium fritted glass funnel and washed with plenty of 2-propanol. Yield, 3.0 g (87 percent) with the 91 area percent purity.

The calculated cross-link moiety density for polymers made from this monomer is 0.00452 moles/ml.

Example 3 - Method of making porous films

To a 25 milliter round bottom flask was added 3.0 grams of monomer of Formula I, 1.50 grams of linear polystyrene, monomethacrylate terminated (Mn = 1,900 g/mole, Mw/Mn = 1.10, from Scientific Polymer Products, Inc.) and 9.0 grams of γ-butyrolactone (GBL). The resulting mixture was purged under nitrogen for 15 minutes and then heated to 180°C with an oil bath under nitrogen for 4.0 hours. The mixture was then cooled to 145°C and diluted with 8.0 grams of cyclohexanone. The mixture was further cooled to room temperature to give a polymer mixture in GBL/cyclohexanone (21 percent in weight). GPC shows that the formulation has a molecular weight of 43,000 g/mole (Mw) with a polydispersity

of 4.7.

The mixture was applied to a silicon wafer and cast by spin-coating to form a ~0.9 micron thick film. The film was baked on an MTI hotplate at 150°C for 2 minutes, and the coated wafer was transferred to a vacuum oven. The oven temperature was ramped at 7°C/ minute to 400°C under nitrogen, then held for 120 minutes to allow the decomposition of polystyrene porogen before cooling. An estimate of the average spherical pore size based on small angle X-ray scattering (SAXS) measurement of the film was about 2.0 nm in diameter. The refractive index of the resulting film was 1.53 with a dielectric constant of 2.2.

Example 4 - Method of making porous film

To a 25 milliter round bottom flask was added 2.0 grams of monomer of Formula I, 1.0 grams of linear PMMA, monostyrenic terminated (Mn = 4,700 g/mole, Mw/Mn = 1.06, from Polymer Sources, Inc.) and 6.0 grams of γ-butyrolactone (GBL). The resulting mixture was purged under nitrogen for 15 minutes and then heated to 180°C with an oil bath under nitrogen for 4.0 hours. The mixture was then cooled to 145°C and diluted with 5.0 grams of ethyl-3-ethoxypropionate (EEP). The mixture was further cooled to room temperature to give a polymer mixture in GBL/EEP (21 percent in weight).

The mixture was applied to a silicon wafer and cast by spin-coating to form a ~0.85 micron thick film. The film was baked on an MTI hotplate at 150°C for 2 minutes, and the coated wafer was transferred to a vacuum oven. The oven temperature was ramped at 7°C/ minute to 400°C under nitrogen, then held for 120 minutes to allow the decomposition of PMMA porogen before cooling. An estimate of the average spherical pore size based on TEM measurement of the film was about 3.3 nm in diameter. The refractive index of the resulting film was 1.54.

Comparative Example 5 - Method of making nanoporous film with higher molecular weight linear porogens

To a 25 milliter round bottom flask was added 3.0 grams of monomer of Formula I, 1.5 grams of linear polystyrene, monophenylethynyl terminated (Mn = 10,600 g/mole, Mw/Mn = 1.06) and 9.0 grams of γ-butyrolactone (GBL). The resulting mixture was purged under nitrogen for 15 minutes and then heated to 180°C with an oil bath under nitrogen for 4.0 hours. The mixture was then cooled to 145°C and diluted with 8.0 grams of cyclohexanone (CHO). The mixture was further cooled to room temperature to give a polymer mixture in GBL/CHO (21 percent in weight).

The mixture was applied to a silicon wafer and cast by spin-coating to form a ~0.92 micron thick film. The film was baked on an MTI hotplate at 150°C for 2 minutes, and the coated wafer was transferred to a vacuum oven. The oven temperature was ramped at 7°C/ minute to 400°C under nitrogen, then held for 120 minutes to allow the decomposition of polystyrene porogen before cooling. TEM measurement showed that the pores in the resulting film was highly interconnected with the pore size ranged from 40 to 200 nm. The refractive index of the resulting film was 1.45.

Applicants believe the pore size was large and interconnected in this case because of the higher molecular weight of porogens.

Example 6

To a 25 milliter round bottom flask was added 2.0 grams of monomer of Formula XVI, 1.0 grams of linear polystyrene, monomethacrylate terminated (Mn = 1,900 g/mole, Mw/Mn = 1.10, from Scientific Polymer Products, Inc.) and 5.3 grams of mesitylene. The resulting mixture was purged under nitrogen for 15 minutes and then heated to 175°C with an oil bath under nitrogen for 4.0 hours. The mixture was then cooled to 145°C and diluted with 5.0 grams of ethyl-3-ethoxypropionate (EEP). The mixture was further cooled to room temperature to give a polymer mixture in Mesitylene/EEP(23 percent in weight).

The mixture was applied to a silicon wafer and cast by spin-coating to form a ~0.7 micron thick film. The film was baked on an MTI hotplate at 150°C for 2 minutes, and the coated wafer was transferred to a vacuum oven. The oven temperature was ramped at 7°C/ minute to 400°C under nitrogen, then held for 120 minutes to allow the decomposition of polystyrene porogen before cooling. An estimate of the average spherical pore size based on TEM measurement of the film was about 3.6 nm in diameter. The refractive index of the resulting film was 1.52.

Comparative Example 7 using lower XLMD matrix

To a 25 milliliter round bottom flask was added 3.0 grams of monomer of following Formula, 1.5 grams of linear polystyrene, monomethacrylate terminated(Mn = 1,900 g/mole, Mw/Mn = 1.10, from Scientific Polymer Products, Inc.) and 9.0 grams of γ-butyrolactone (GBL). The resulting mixture was purged under nitrogen for 15 minutes and then heated to 200°C with an oil bath under nitrogen for 7.0 hours. The mixture was then cooled to 145°C and diluted with 7.0 grams of ethyl-3-ethoxypropionate (EEP). The mixture was further cooled to room temperature to give a polymer mixture in

GBL/EEP(22 percent in weight).

The mixture was applied to a silicon wafer and cast by spin-coating to form a ~0.7 micron thick film. The film was baked on an MTI hotplate at 150°C for 2 minutes, and the coated wafer was transferred to a vacuum oven. The oven temperature was ramped at 7°C/ minute to 400°C under nitrogen, then held for 120 minutes to allow the decomposition of polystyrene porogen before cooling. The refractive index of the resulting film was 1.6225 indicating no pore or very low porosity film was formed (the refractive index of the pure matrix film from this monomer is about 1.63).

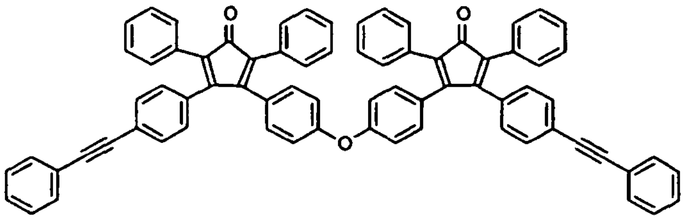

This monomer (low XLMD monomer 1) has a calculated cross-link moiety density of 0.00216 mole/ml.

Example 8

To a 25 milliter round bottom flask was added 3.0 grams of monomer of Formula I, 2.7 grams of linear polystyrene, monomethacrylate terminated (47 percent porogen loading, Mn = 1,900 g/mole, Mw/Mn = 1.10, from Scientific Polymer Products, Inc.) and 9.0 grams of γ-butyrolactone (GBL). The resulting mixture was purged under nitrogen for 15 minutes and then heated to 180°C with an oil bath under nitrogen for 4.0 hours. The mixture was then cooled to 145°C and diluted with 13.6 grams of cyclohexanone (CHO). The mixture was further cooled to room temperature to give a polymer mixture in GBL/CHO (17 percent in weight) with the Mw of 8,800 g/mole and Mw/Mn = 2.0.

The mixture was applied to a silicon wafer and cast by spin-coating to form a ~0.77 micron thick film. The film was baked on an MTI hotplate at 150°C for 2 minutes, and the coated wafer was transferred to a vacuum oven. The oven temperature was ramped at 7°C/ minute to 400°C under nitrogen, then held for 120 minutes to allow the decomposition of polystyrene porogen before cooling. An estimate of the average spherical pore size based on TEM measurement of the film was about 2.0 nm in diameter. The refractive index of the resulting film was 1.529, showing little or no further benefit over porogen loading at 33 percent (RI = 1.534 and 40 percent (RI= 1.530).

Example 9 - Use of alpha-methyl styrene monomer as a component of the linear porogens

The following table illustrates the effect of increasing the ratio of alpha-methylstyrene in the porogen composition in order to effect enhanced burnout at a reduced cure temperature and time vs. the standard condition of 400 °C for 2 hours. The films were prepared from B-staged solutions from the monomer of Formula I and various porogen compositions based on linear polystyrene/alpha-methylstyrene with a methacrylate terminal group that vary in alpha-methylstyrene content from 0 percent to 100 mole percent. All porogens were nominally 2000 g/mol in molecular weight. The numerical data represent the remaining concentration of porogen based on infrared measurements of the film cured at 350 °C for 1 hour expressed as a weight percent of the original value.

Remaining Porogen Concentration (wt percent of original value) in Cured Films*

| Cure Conditions | polystyrene porogen (control) | 20/80 α-methylstyrene/ styrene porogen | 30/70 α-methylstyrene/ styrene porogen | 60/40 α-methylstyrene/ styrene porogen | 70/30 α-methylstyrene/ styrene porogen | 80/20 α-methylstyrene/ styrene porogen | α-methylstyrene porogen |
|---|---|---|---|---|---|---|---|
| 350 °C for 1 hour | 8.5 | 8.1 | 4.3 | 6.4 | 1.8 | 1.8 | 2.3 |

* measured by FTIR and normalized to data at 400 °C for 2 hours (zero percent porogen)

It can be seen from these data that the porogen composition needs to be at least 70 percent alpha-methylstyrene in order to remove most of the porogen from the film at 350 °C for 1 hour, and that going to even higher levels of alpha-methylstyrene in the porogen composition does not appear to offer any benefit with regard to enhanced porogen burnout.

The following table illustrates the cured film refractive indices (measure of net porosity) and average pore sizes obtained using various weight percent loadings of a 2700 molecular weight 70/30 alpha-methylstyrene/styrene (AMS/styrene) copolymer porogen compared to a 33 percent loading of a 1900 molecular weight polystyrene homopolymer porogen in conjunction with b-staged solutions from the monomer of Formula I. The data reported are refractive index coupled with average pore size. It can be seen that the pure polystyrene porogen is not completely burned out as evidenced by the higher refractive index at the 350 °C/1 hour cure condition, while the 70/30 AMS/S porogen is as completely burned out at the lower temperature as it is at 400 °C, as evidenced by the lower refractive index. Likewise, the 40 percent loading of the 70/30 AMS/styrene porogen affords an equivalent refractive index and pore size as the 33 percent polystyrene porogen within the total range of 33-45 wt percent.

Film Refractive Index (Pore Size*) vs. Porogen Loading

| Cure Conditions | 33% polystyrene porogen (control) | 33% 70/30 AMS / styrene porogen | 40% 70/30 AMS / styrene porogen | 45% 70/30 AMS / styrene porogen |
|---|---|---|---|---|
| 400 °C for 2 hours<br>350 °C for 1 hour | 1.533 (2.05 nm)<br>1.545 (1.94 nm) | 1.551 (2.40 nm)<br>1.545 (2.06 nm) | 1.542 (2.50 nm)<br>1.533 (2.19 nm) | 1.539 (3.68 nm)<br>1.529 (3.85 nm) |
| * determined by small angle X-ray scattering (SAXS) | | | | |

The following data illustrates the effect of porogen molecular weight on the cured film refractive index. A series of 70/30 AMS/styrene porogens of differing molecular weights were B-staged with monomer of Formula I, cured and tested and the resulting film properties are given in the following table relative to the control loading of 33 wt percent of a 1900 molecular weight polystyrene homopolymer porogen.

Film Refractive Index (Pore Size*) vs. Porogen Molecular Weight

| Cure Conditions | 33% 1900 MW polystyrene porogen (control) | 40% 1900 MW 70/30 AMS / styrene porogen | 40% 2700 MW 70/30 AMS / styrene porogen | 40% 3600 MW 70/30 AMS / styrene porogen |
|---|---|---|---|---|
| 400 °C for 2 hours<br>350 °C for 1 hour | 1.533 (2.05 nm)<br>1.545 (1.94 nm) | 1.572 (1.99 nm)<br>1.555 (1.95 nm) | 1.542 (2.50 nm)<br>1.533 (2.19 nm) | 1.534 (2.90 nm)<br>1.527 (3.01 nm) |
| * determined by SAXS | | | | |

It is observed that a 2700 g/mol molecular weight 70/30 AMS/styrene porogen is required to obtain comparable refractive index and pore size to the control sample containing 33 percent of the 1900 g/mol molecular weight polystyrene porogen.

## Claims

**1.** A method of forming a nanoporous film comprising

forming a coating solution which comprises a matrix precursor material, a porogens material and a solvent, by selecting a polyarylene matrix precursor material which cross-links to form a matrix with a calculated cross-link moiety density (XLMD) of at least 0.003 moles/ml, and reacting the polyarylene matrix precursor material with a porogen which is linear oligomer which is formed from monomers comprising alkenyl or alkynyl functional monomers, which has reactive end groups and a weight average molecular weight in the range of no more than 5000 when measured via size exclusion chromatography with polystyrene calibration, where the porogen is present in amounts in the range of 10 to less than 50 percent by weight based on total weight of porogens and matrix precursor material,
applying the coating solution to a substrate and removing the solvent to form a film,
applying energy to the film to cross-link the matrix precursor material and remove the porogens to form pores with an average pore size of less than 4 nm where the porogen is **characterized in that** it is not removed until sufficient cure has occurred in the matrix material such that no pore collapse occurs.

2. The method of claim 1 where applying energy comprises heating the film at a temperature in the range of 300 to 425°C to cross-link the matrix precursor material and remove the porogens to form pores with an average pore size of less than 4 nm.

3. The method of claim 1 where the calculated cross-link moiety density is greater than 0.0035 moles/ml.

4. The method of claim 1 where the weight average molecular weight of the linear porogen is less than 4000 g/mol.

5. The method of claim 1 where the weight average molecular weight of the linear porogen is less than 2000 g/mol.

6. The method of claim 1 where the weight average molecular weight of the linear porogens is at least 500 g/mol.

7. The method of claim 1 where the amount of porogen is from 30 to 45 percent by weight of porogens and matrix.

8. The method of claim 1 where the matrix precursor is selected from the following monomers or oligomers made from the following monomers:

Formula I:

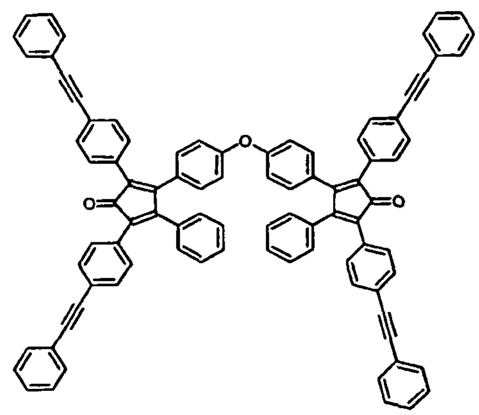

Formula II:

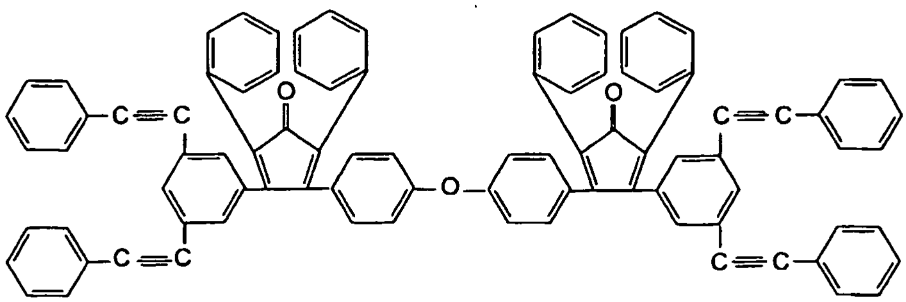

Formula III:

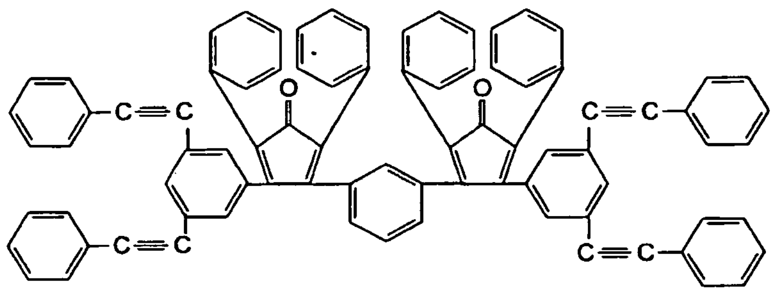

Formula IV:

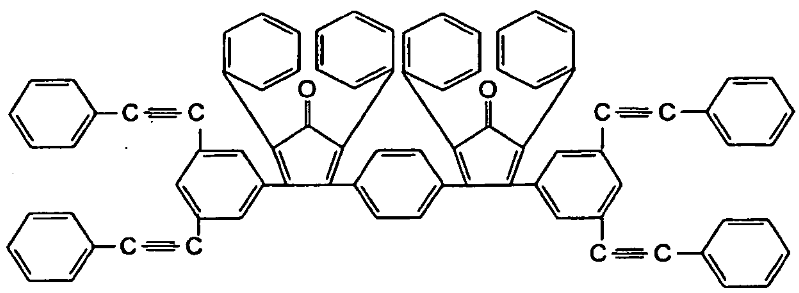

Formula V:

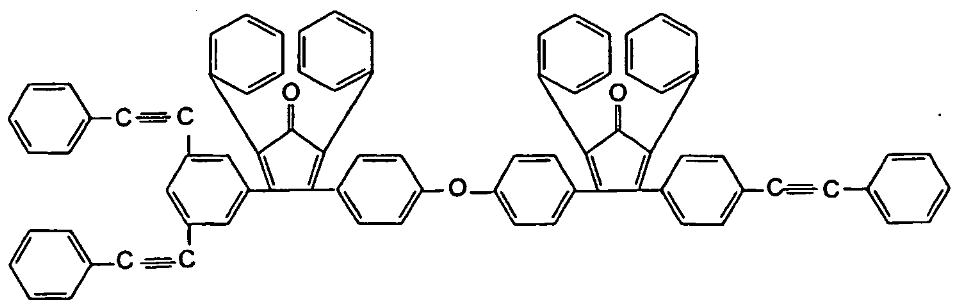

Formula VI:

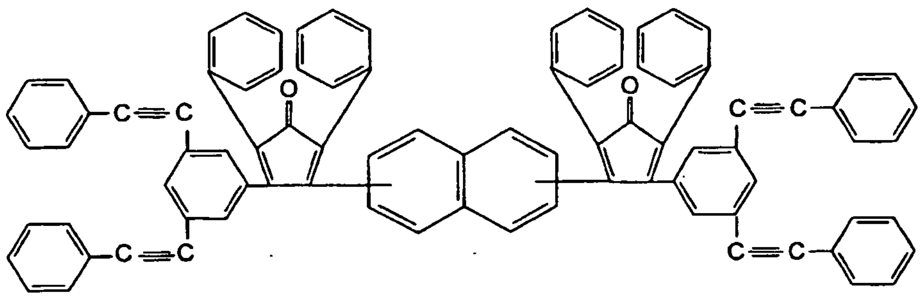

Formula VII:

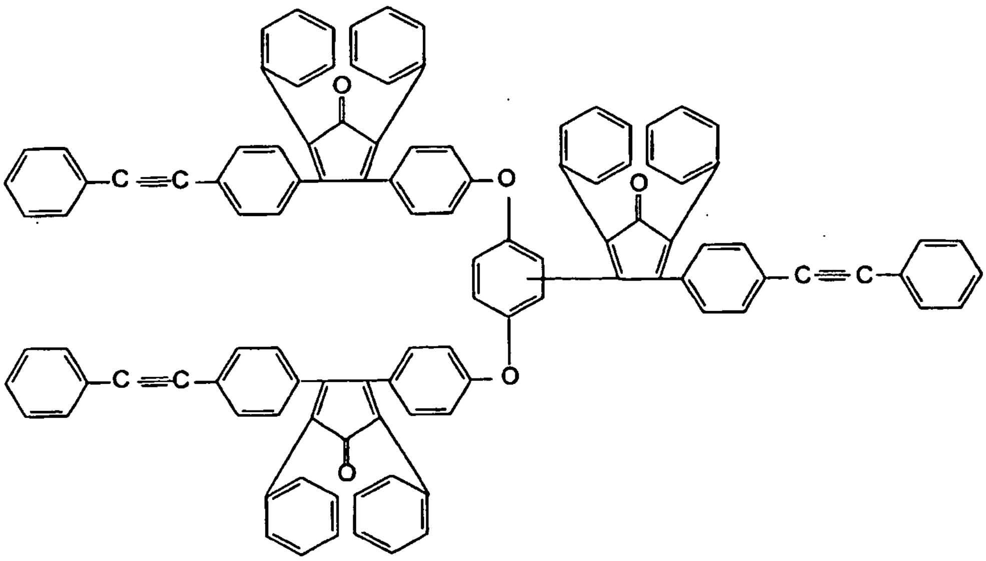

Formula VIII (a mixture of):

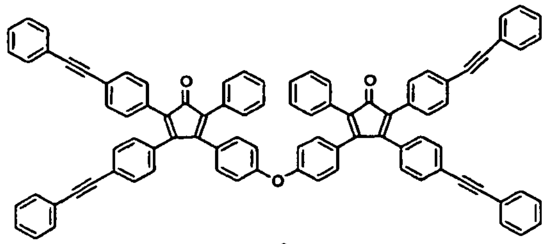

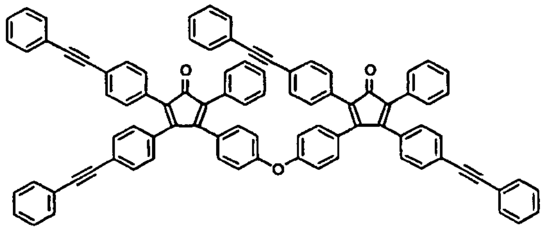

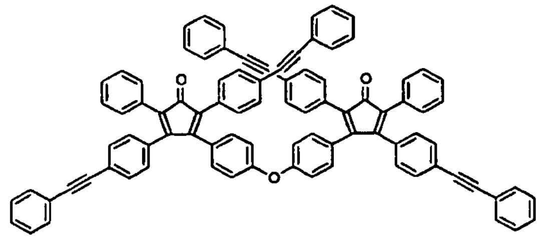

Formula IX (a mixture of):

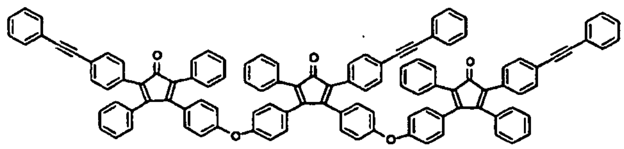

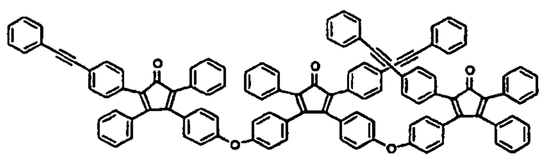

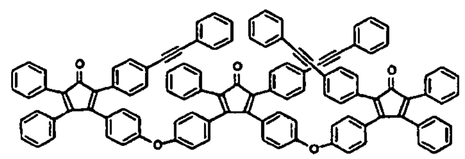

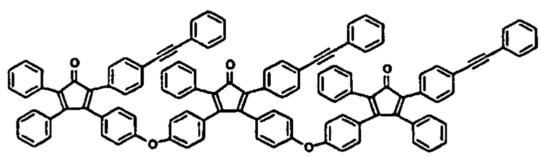

Formula X (a mixture of):

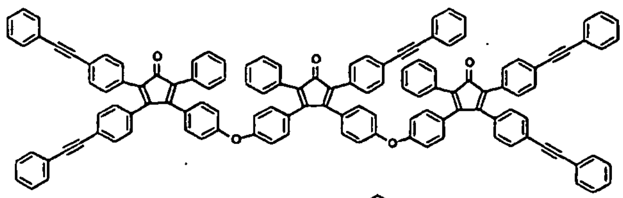

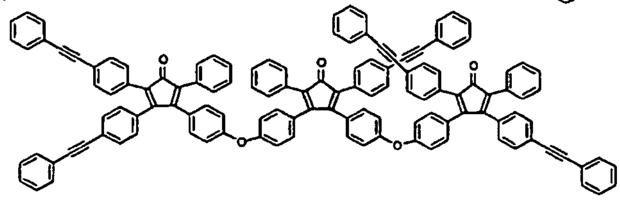

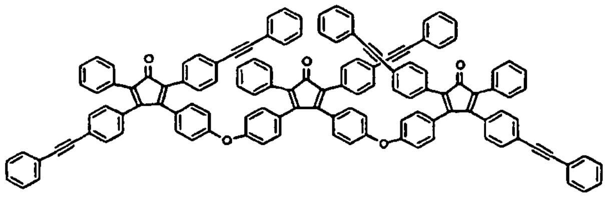

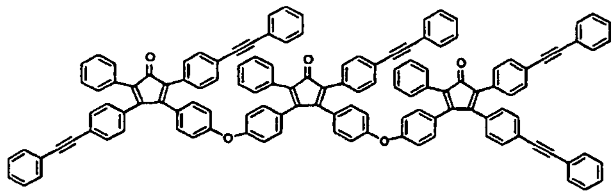

Formula XI:

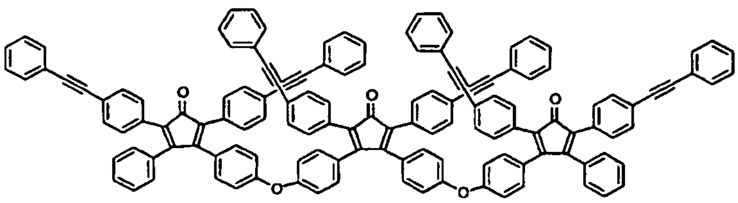

Formula XII:

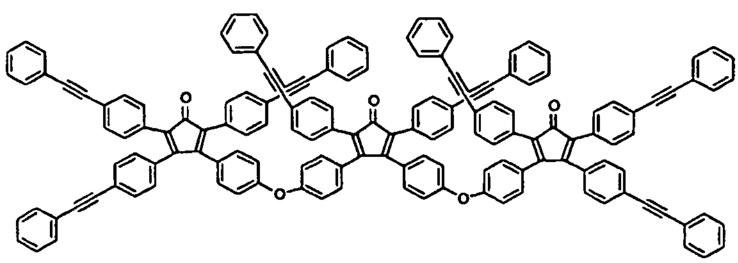

Formula XIII:

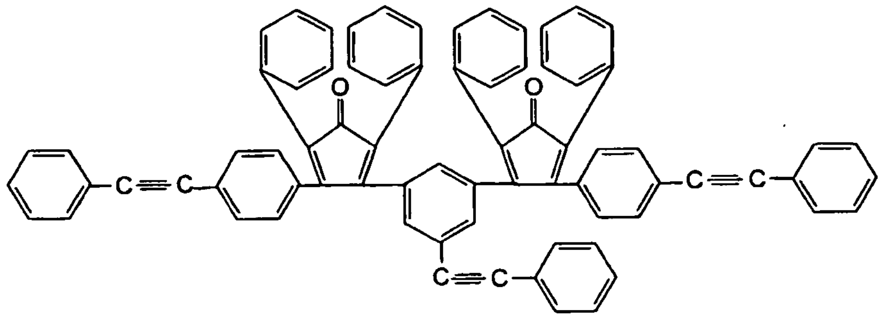

Formula XIV:

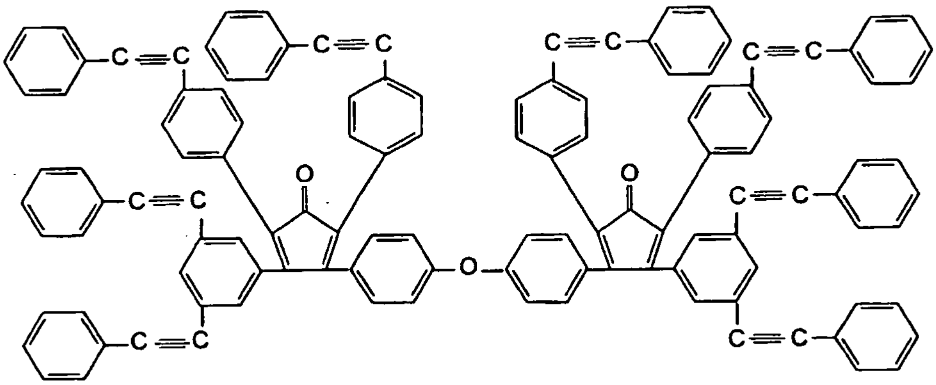

Formula XV

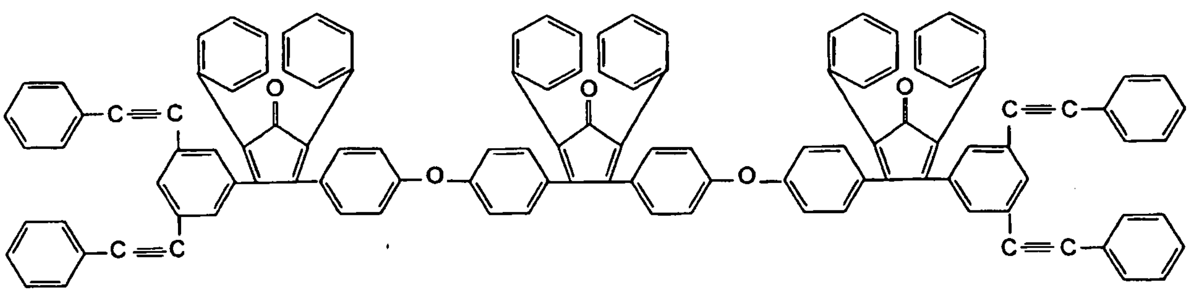

Formula XVI (Left) and XVII (Right):

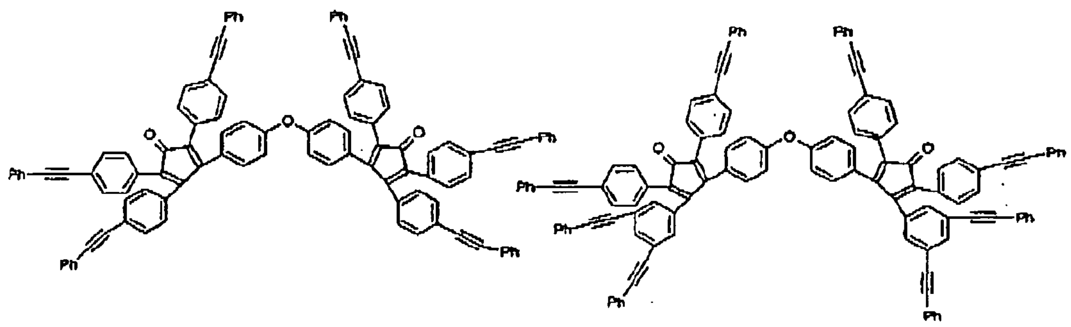

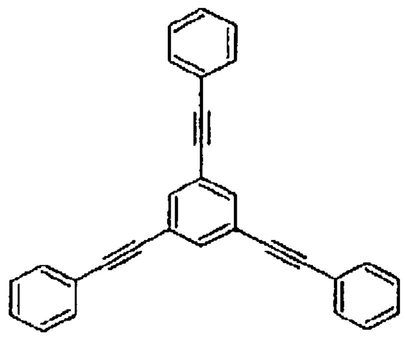

**9.** The method of claim 1 where the porogen is a linear polystyrene, or a linear styrene/alpha-methyl styrene copolymer of up to 80 percent by mole alpha-methyl styrene.

**10.** The method of claim 1 where the porogen is formed primarily from one or more of the following monomers: styrene, alkyl substituted styrenes, aryl-substituted styrenes, arylalkynyl alkyl-substituted styrenes; 4-phenylethynylstyrene, phenoxy-, alkoxy-, carboxy-, hydroxy-, or alkyloyl- and aroyl-substituted styrenes; vinylnaphthalene, vinylanthracene; stilbene; acrylates and methacrylates, alkylene oxides.

**11.** The method of claim 1 where the matrix precursor is an oligomer formed from the monomer of formula I:

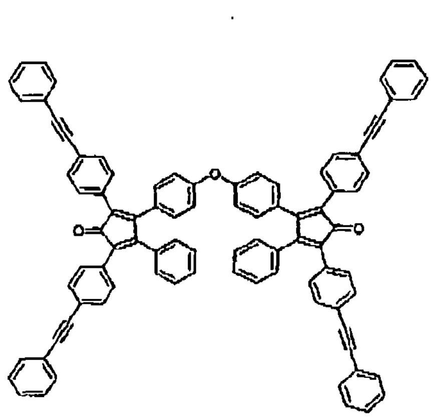

and the porogen is a linear styrenic oligomer having a molecular weight of 2000 g/mol or less and the porogen is present in amounts of 30-45 percent by weight based on weight of the matrix and the porogens.

12. The method of claim 11 where the porogen is linear polystyrene.

13. The method of claim 11 where the porogen is a linear copolymer of styrene/alpha-methyl styrene of up to 80 percent by mole alpha-methyl styrene.

**Patentansprüche**

1. Verfahren zur Herstellung eines nanoporösen Films umfassend:

   Bilden einer Beschichtungslösung, die ein Matrixvorläufermaterial, ein porogenes Material und ein Lösungsmittel enthält, durch Auswahl eines Polyarylenmatrixvorläufermaterials, das vernetzt, um eine Matrix mit einer berechneten Vernetzungseinheitendichte (XLMD) von wenigstens 0,003 mol/ml zu bilden, und Umsetzen des Polyarylenmatrixvorläufermaterials mit einem Porogen, das ein lineares Oligomer ist, das aus Monomeren gebildet wird, die alkenyl- oder alkinylfunktionelle Monomere umfassen, das reaktive Endgruppen und ein gewichtsmittleres Molekulargewicht im Bereich von nicht mehr als 5000 aufweist, gemessen durch Größenausschlusschromatographie mit Polystyrolkalibrierung, wobei das Porogen in Mengen im Bereich von 10 bis weniger als 50 Gew.-%, bezogen auf das Gesamtgewicht von Porogenen und Matrixvorläufermaterial, vorhanden ist,
   Aufbringen der Beschichtungslösung auf ein Substrat und Entfernen des Lösungsmittels, um einen Film auszubilden,
   Anwenden von Energie auf den Film, um das Matrixvorläufermaterial zu vernetzen und die Porogene zu entfernen, um Poren mit einer mittleren Porengröße von weniger als 4 nm zu bilden, wobei das Porogen **dadurch gekennzeichnet ist, dass** es nicht entfernt wird, bis eine ausreichende Härtung in dem Matrixmaterial stattgefunden hat, so dass kein Porenzusammenbruch stattfindet.

2. Verfahren nach Anspruch 1, wobei das Anwenden von Energie Erwärmen des Films auf eine Temperatur im Bereich von 300 bis 425°C umfasst, um das Matrixvorläufermaterial zu vernetzen und die Porogene zu entfernen, um Poren mit einer mittleren Porengröße von weniger als 4 nm zu bilden.

3. Verfahren nach Anspruch 1, wobei die berechnete Vernetzungseinheitendichte größer als 0,0035 mol/ml ist.

4. Verfahren nach Anspruch 1, wobei das gewichtsmittlere Molekulargewicht des linearen Porogens weniger als 4000 g/mol beträgt.

5. Verfahren nach Anspruch 1, wobei das gewichtsmittlere Molekulargewicht des linearen Porogens weniger als 2000 g/mol beträgt.

6. Verfahren nach Anspruch 1, wobei das gewichtsmittlere Molekulargewicht des linearen Porogens wenigstens 500 g/mol beträgt.

7. Verfahren nach Anspruch 1, wobei die Menge an Porogen 30 bis 45 Gew.-% von Porogenen und Matrix beträgt.

8. Verfahren nach Anspruch 1, wobei der Matrixvorläufer ausgewählt ist aus den folgenden Monomeren oder Oligomeren, die aus den folgenden Monomeren hergestellt sind:

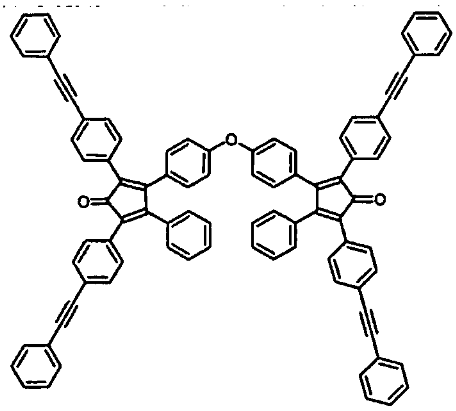

Formel II:

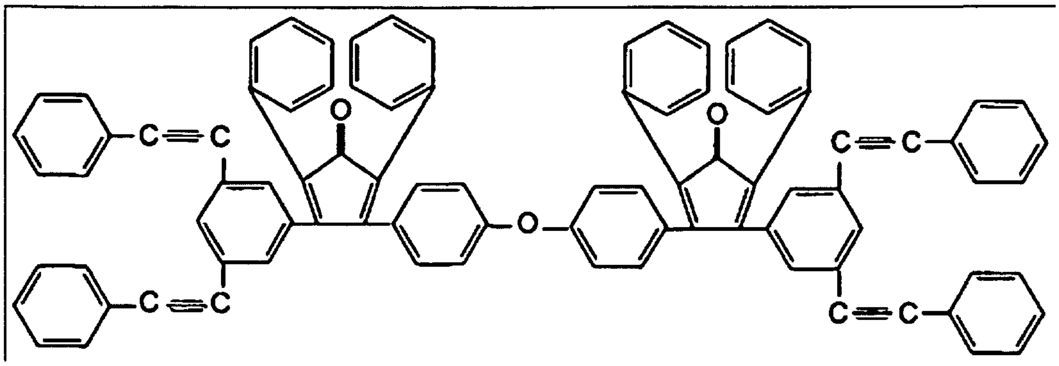

Formel III:

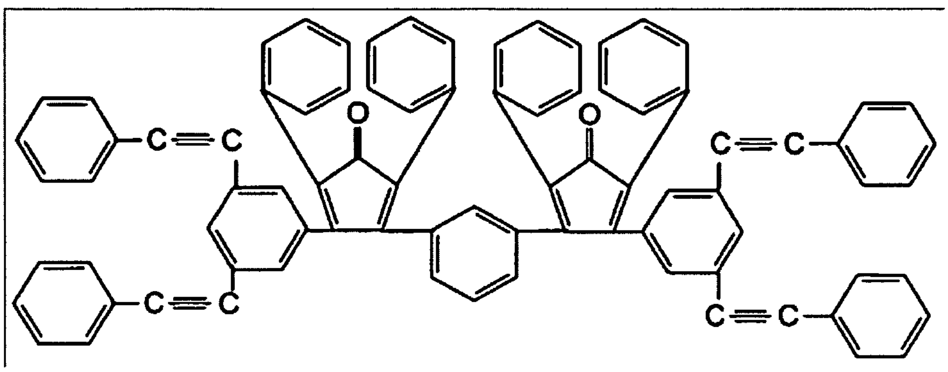

Formel IV:

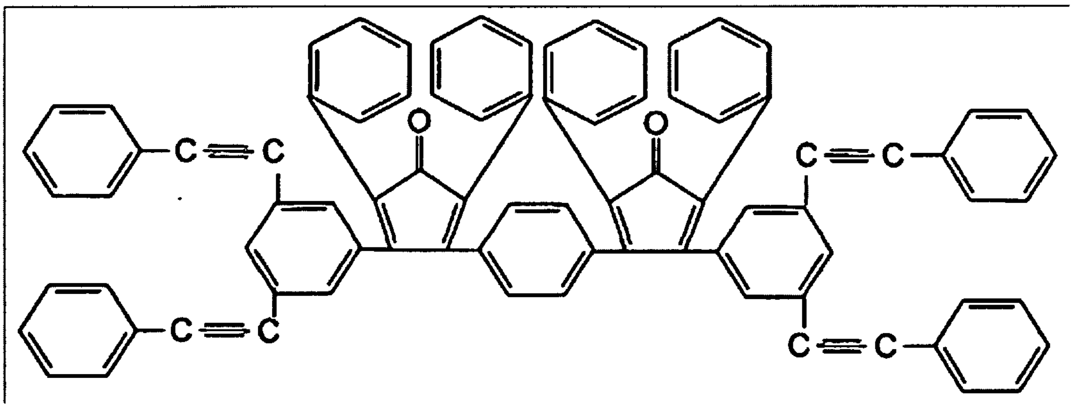

Formel V:

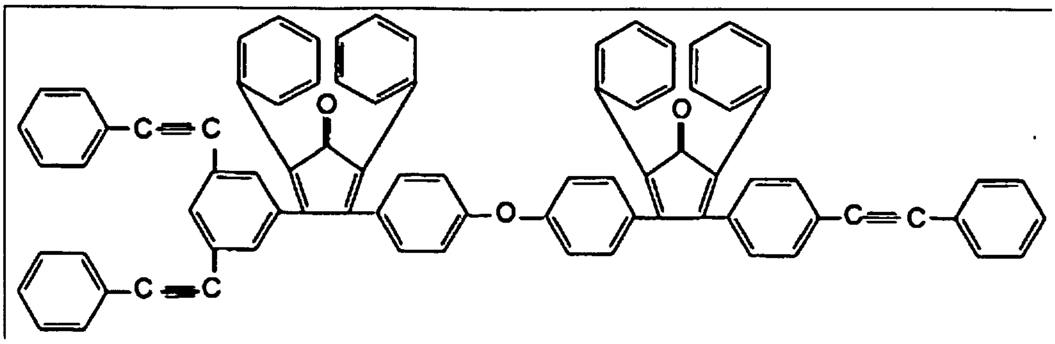

Formel VI:

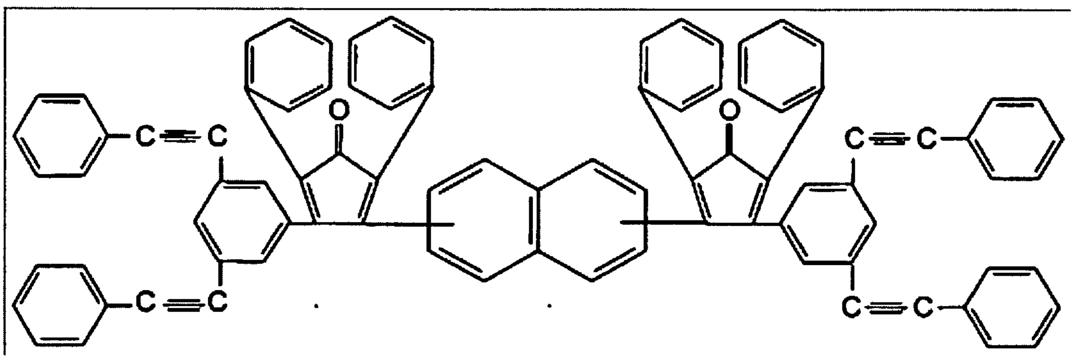

Formel VII:

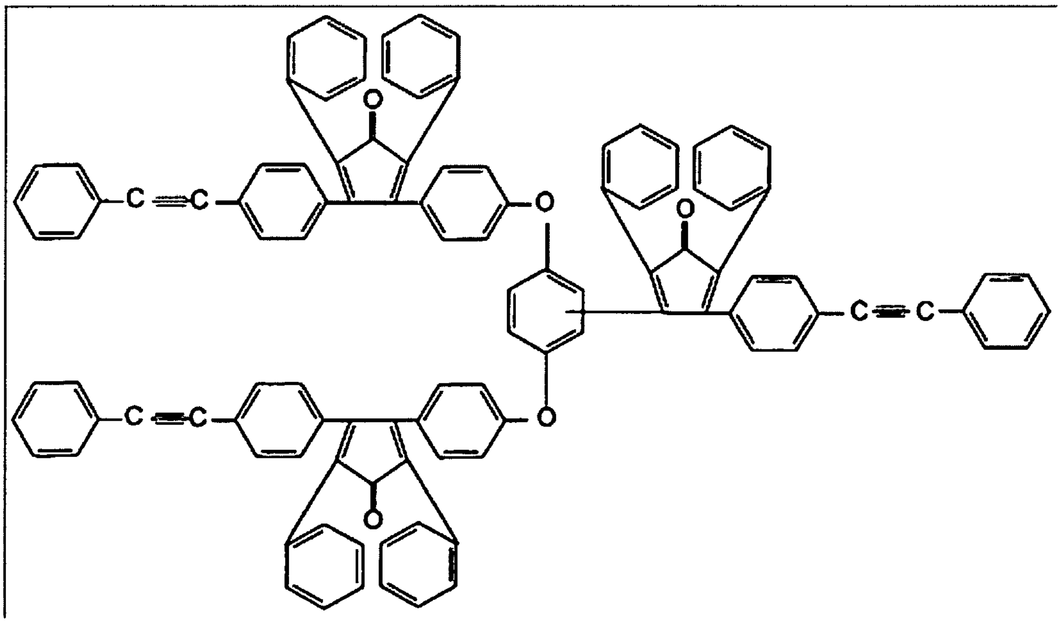

Formel VIII (Mischung von):

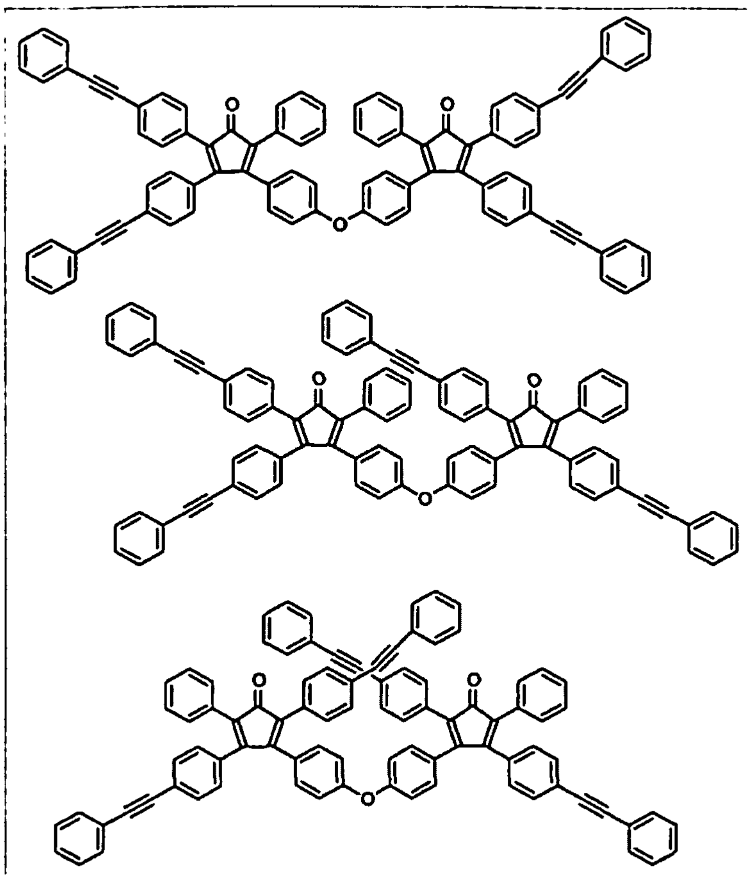

Formel IX (Mischung von):

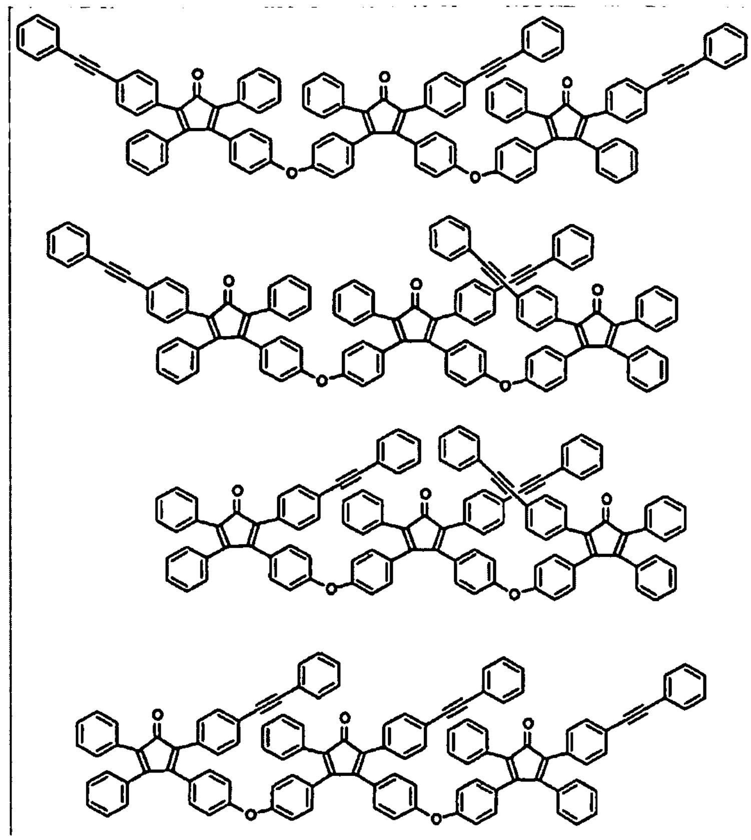

Formel X (Mischung von):

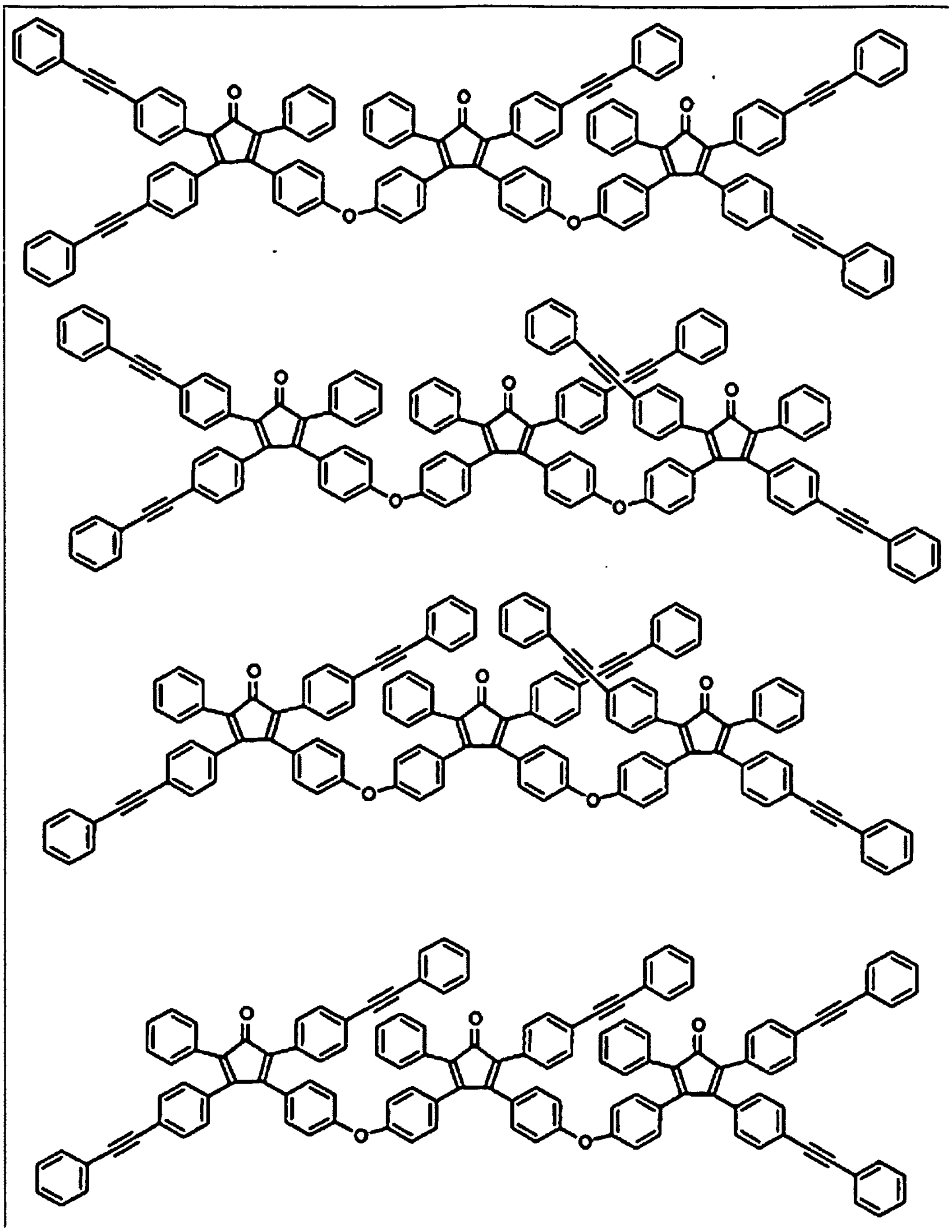

Formel XI:

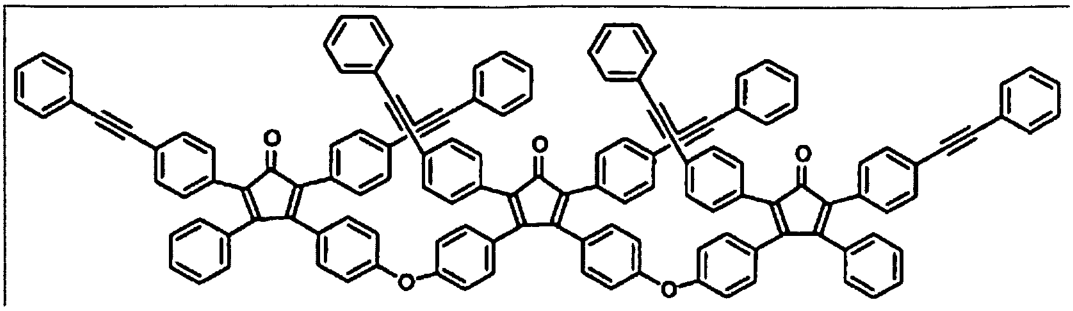

Formel XII:

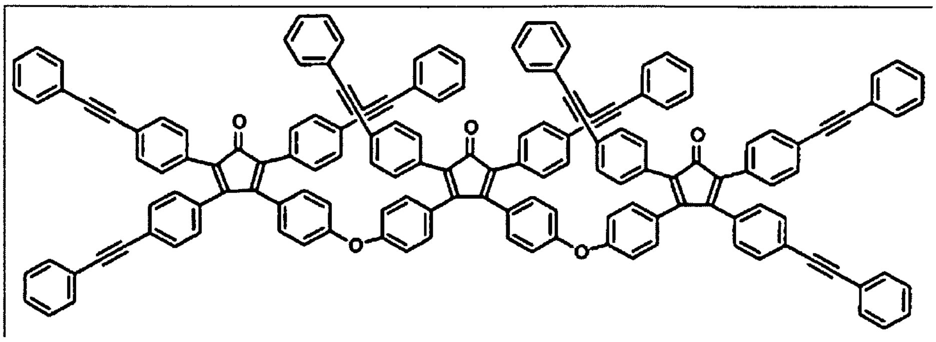

Formel XIII:

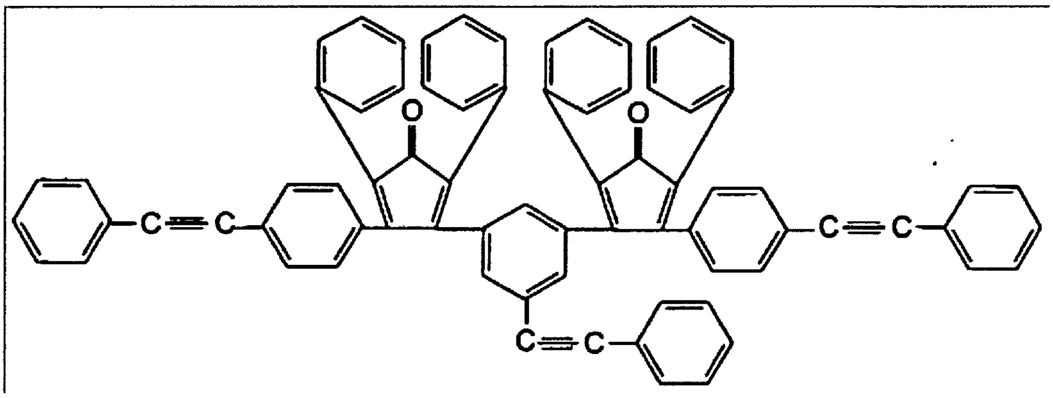

Formel XIV:

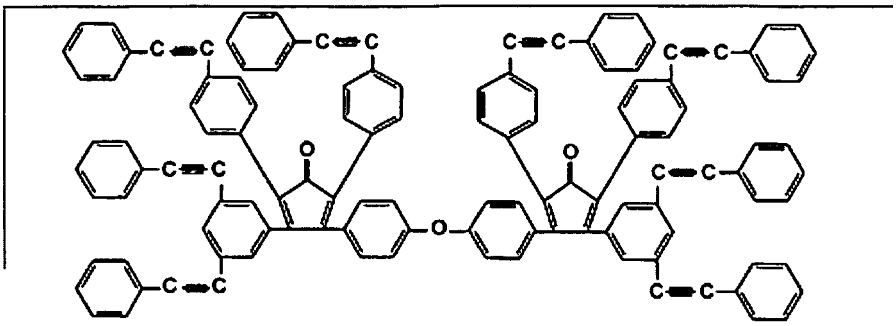

Formel XV:

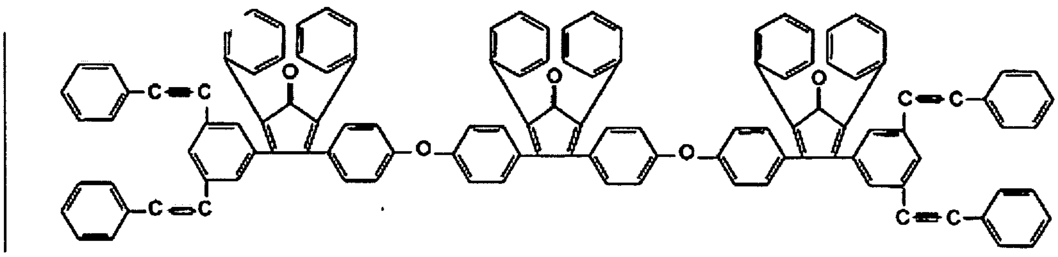

Formel XVI (links) und XVII (rechts):

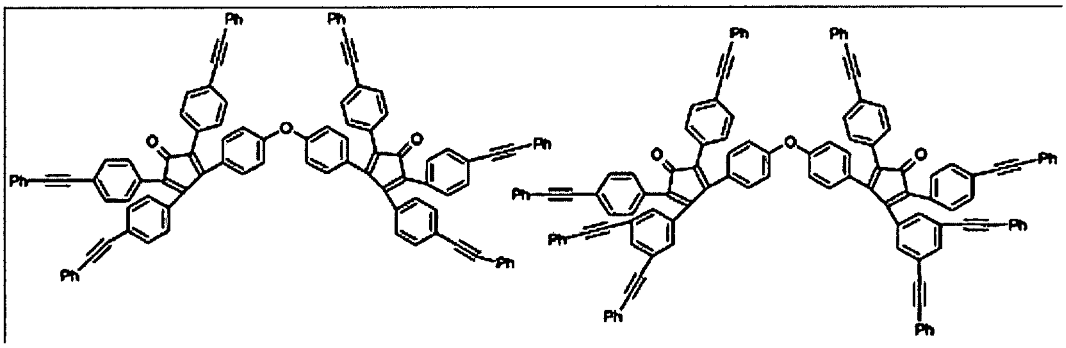

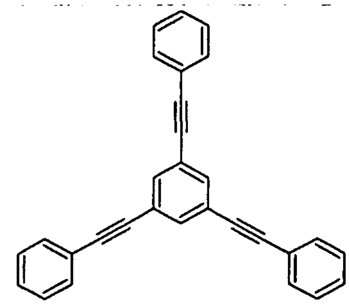

**9.** Verfahren nach Anspruch 1, wobei das Porogen ein lineares Polystyrol oder ein lineares Styrol/α-Methylstyrol-Copolymer mit bis zu 80 mol-% α-Methylstyrol ist.

**10.** Verfahren nach Anspruch 1, wobei das Porogen primär aus einem oder mehreren der folgenden Monomere gebildet ist: Styrol, alkylsubstituierten Styrolen, arylsubstituierten Styrolen, arylalkinyl, alkylsubstituierten Styrolen, 4-Phenylethinylstyrol, phenoxy-, alkoxy-, carboxy-, hydroxy- oder alkyloyl- und aroylsubstituierten Styrolen, Vinylnaphthalin, Vinylanthracen, Stilben, Acrylaten und Methacrylaten, Alkylenoxiden.

**11.** Verfahren nach Anspruch 1, wobei der Martrixvorläufer ein Oligomer ist, das aus dem Monomer der Formel I

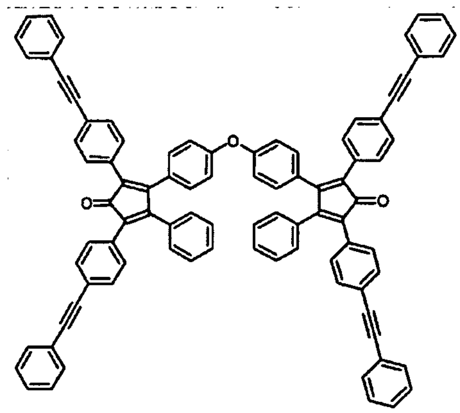

gebildet ist, und das Porogen ein lineares styrolisches Oligomer mit einem Molekulargewicht von 2000 g/mol oder weniger ist und das Porogen in Mengen von 30-45 Gew.-%, bezogen auf das Gewicht der Matrix und der Porogene, vorhanden ist.

**12.** Verfahren nach Anspruch 11, wobei das Porogen lineares Polystyrol ist.

**13.** Verfahren nach Anspruch nach Anspruch 11, wobei das Porogen ein lineares Styrol/α-Methylstyrol-Copolymer mit bis zu 80 mol-% α-Methylstyrol ist.

## Revendications

**1.** Procédé de fabrication d'un film nanoporeux, comportant les étapes suivantes :

- préparer une solution de revêtement, qui comprend un matériau précurseur de matrice, un matériau porogène et un solvant, en choisissant un matériau précurseur de matrice de type polyarylène qui donne, par réticulation, une matrice dont la densité théorique de réticulation XLMD vaut au moins 0,003 mol/mL, et en faisant réagir ce matériau précurseur de matrice de type polyarylène avec un agent porogène, lequel agent est un oligomère linéaire, formé à partir de monomères incluant des monomères fonctionnels alcéniques ou alcyniques, qui comporte des groupes terminaux réactifs et présente une masse molaire moyenne en poids, mesurée par chromatographie d'exclusion stérique avec étalonnage au polystyrène, d'au plus 5000, et lequel agent porogène est présent en une quantité représentant de 10 % à moins de 50 % du poids total de l'agent porogène et du matériau précurseur de matrice ;
- étaler la solution de revêtement sur un substrat et en chasser le solvant, pour qu'il se forme un film ;
- et apporter de l'énergie à ce film pour faire réticuler le matériau précurseur de matrice et en éliminer l'agent porogène, pour qu'il se forme des pores présentant une taille moyenne inférieure à 4 nm ;

l'agent porogène étant **caractérisé en ce qu'**il n'est pas éliminé avant que le matériau matrice ait durci suffisamment pour que les pores ne puissent pas s'écraser.

**2.** Procédé conforme à la revendication 1, dans lequel l'apport d'énergie comporte le fait de chauffer le film à une température située dans la gamme de 300 à 425 °C, pour faire réticuler le matériau précurseur de matrice et en éliminer l'agent porogène, pour qu'il se forme des pores présentant une taille moyenne inférieure à 4 nm.

3. Procédé conforme à la revendication 1, dans lequel la densité théorique de réticulation est supérieure à 0,0035 mol/mL.

4. Procédé conforme à la revendication 1, dans lequel la masse molaire moyenne en poids de l'agent porogène linéaire est inférieure à 4000 g/mol.

5. Procédé conforme à la revendication 1, dans lequel la masse molaire moyenne en poids de l'agent porogène linéaire est inférieure à 2000 g/mol.

6. Procédé conforme à la revendication 1, dans lequel la masse molaire moyenne en poids de l'agent porogène linéaire vaut au moins 500 g/mol.

7. Procédé conforme à la revendication 1, dans lequel la quantité d'agent porogène représente de 30 à 45 % du poids de l'agent porogène et de la matrice.

8. Procédé conforme à la revendication 1, pour lequel le précurseur de matrice est choisi parmi les monomères suivants et les oligomères préparés à partir des monomères suivants :

Formule I :

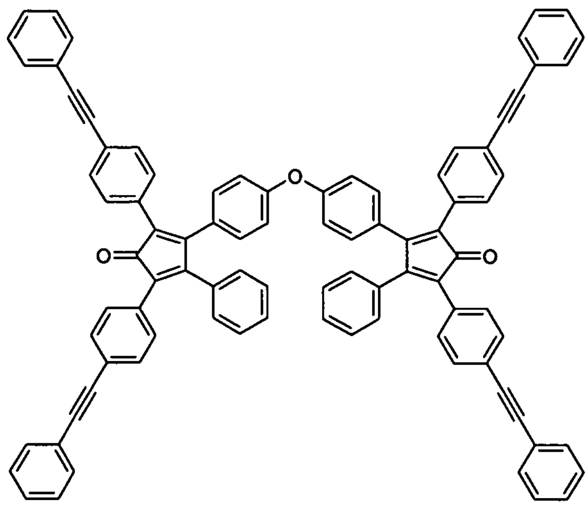

Formule II :

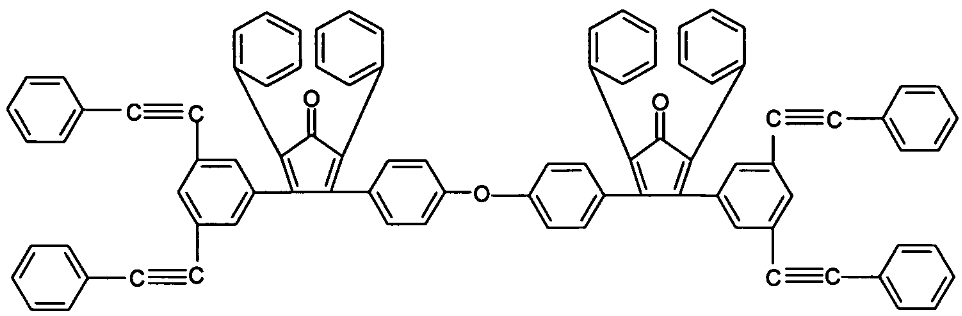

Formule III :

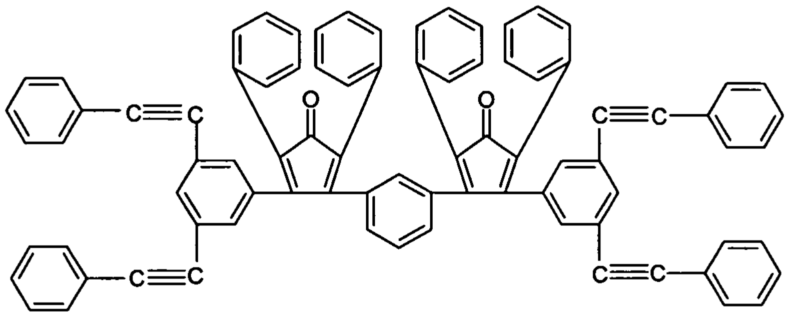

Formule IV :

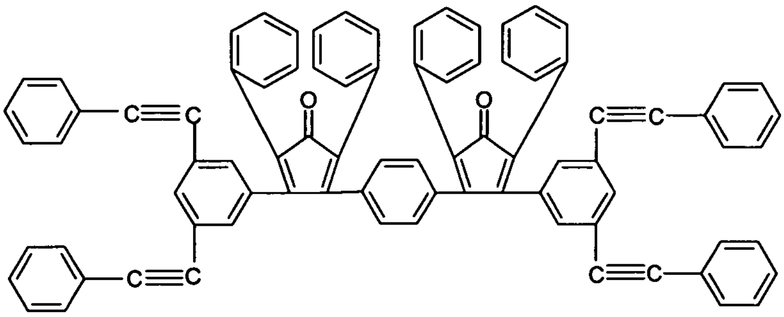

Formule V :

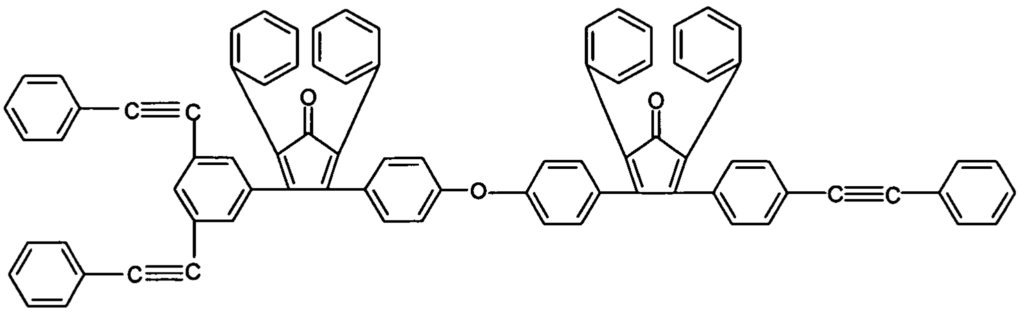

Formule VI :

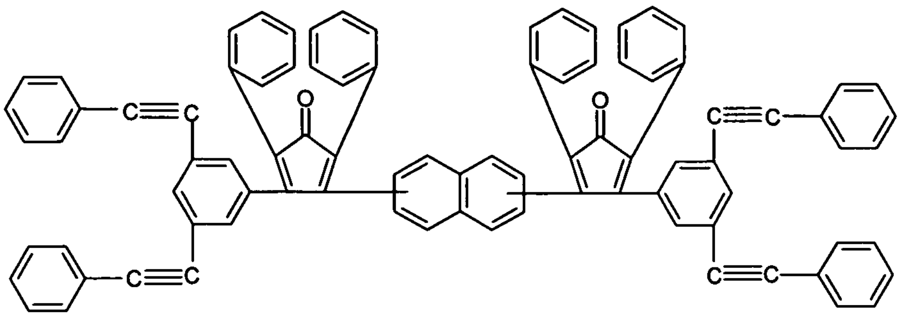

Formule VII :

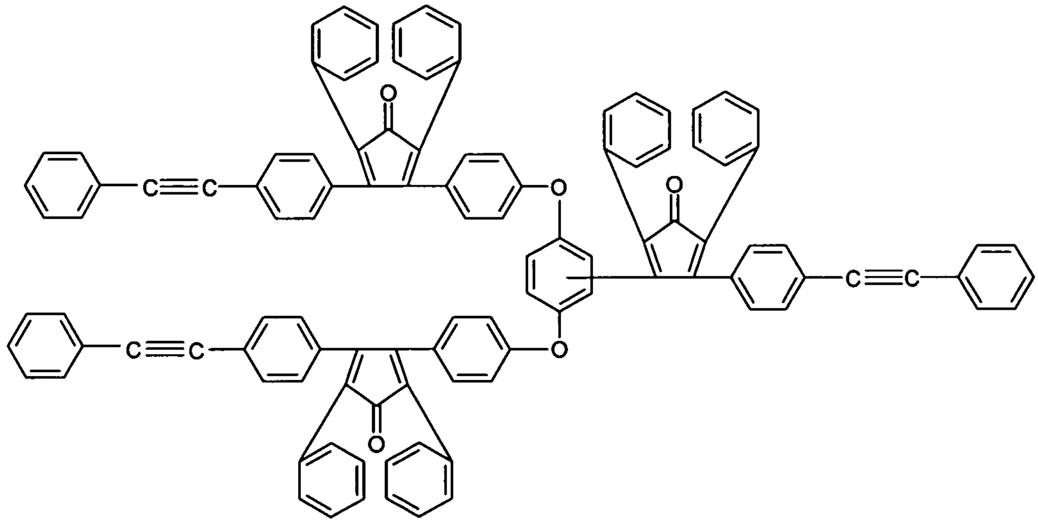

Formule VIII (mélange) :

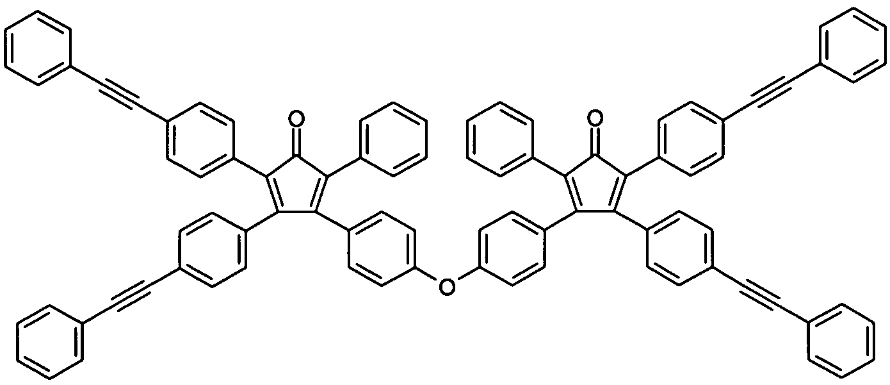

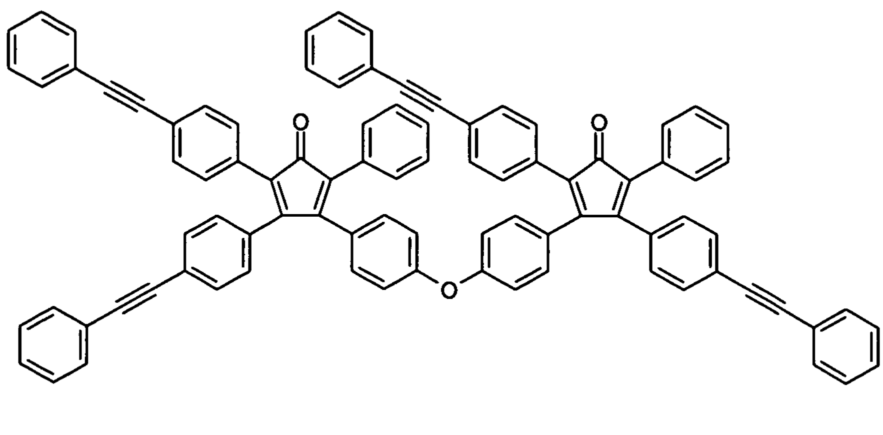

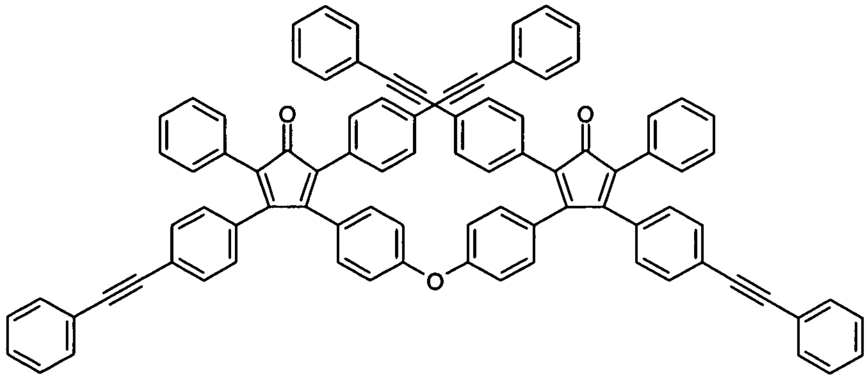

Formule IX (mélange) :

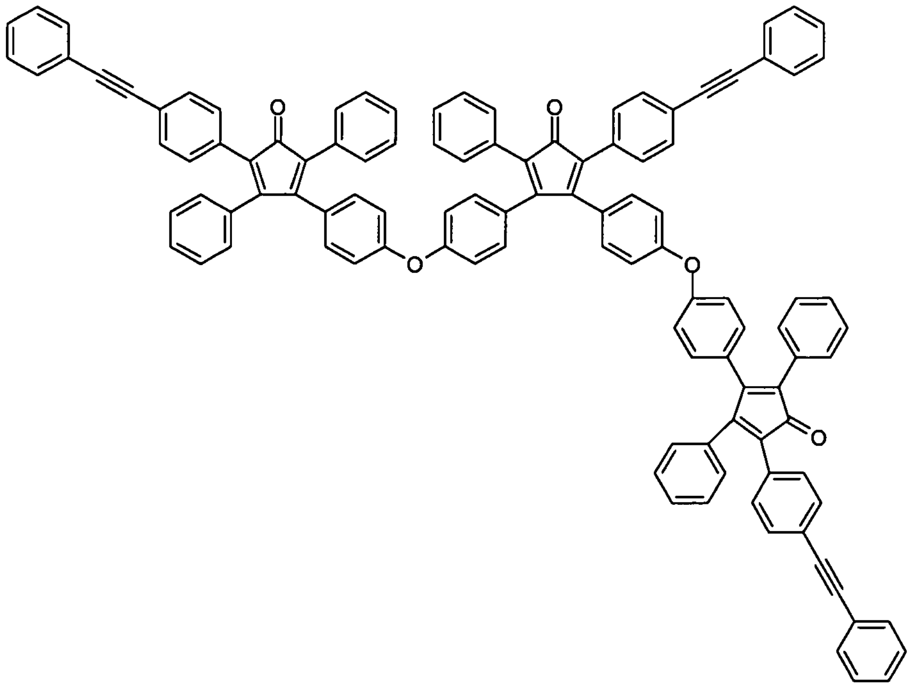

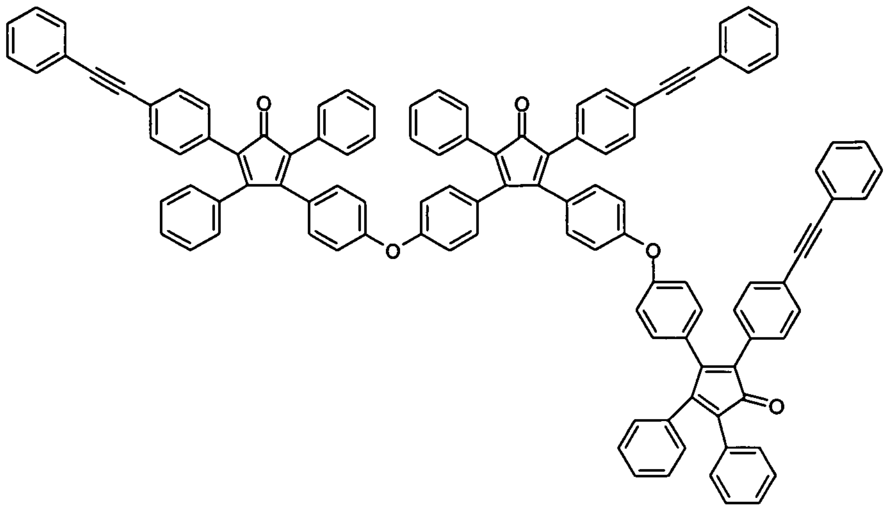

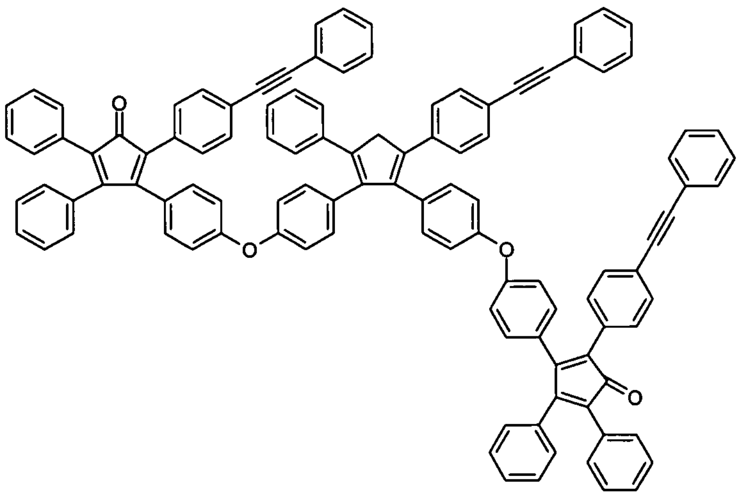

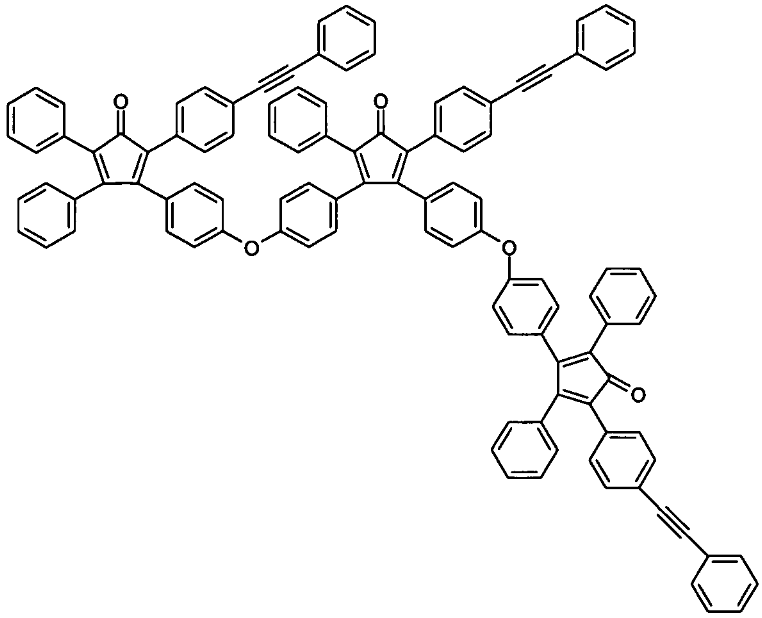

Formule X (mélange) :

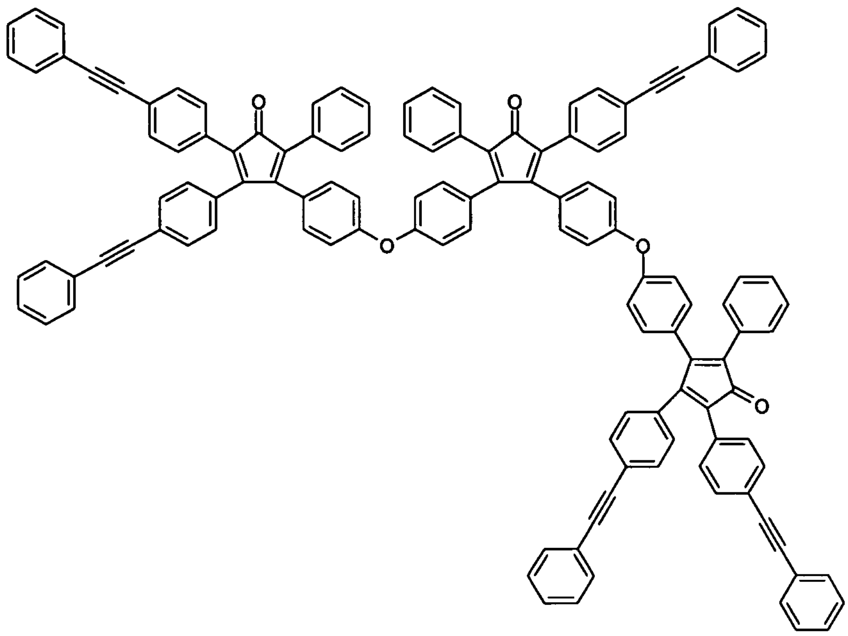

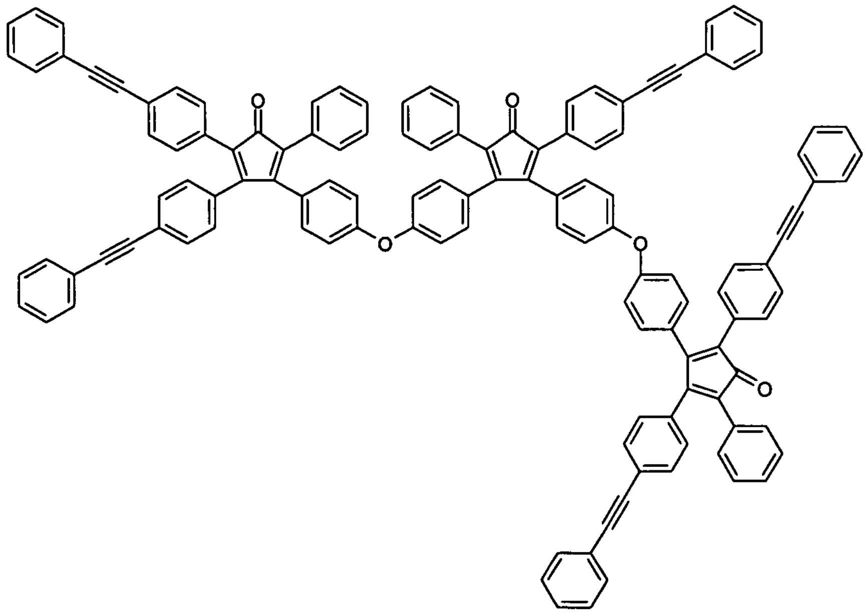

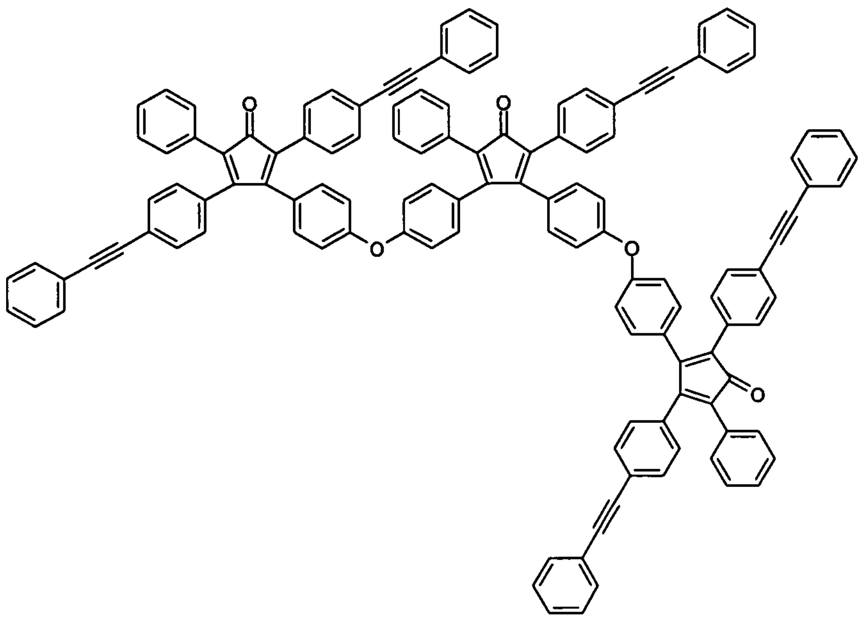

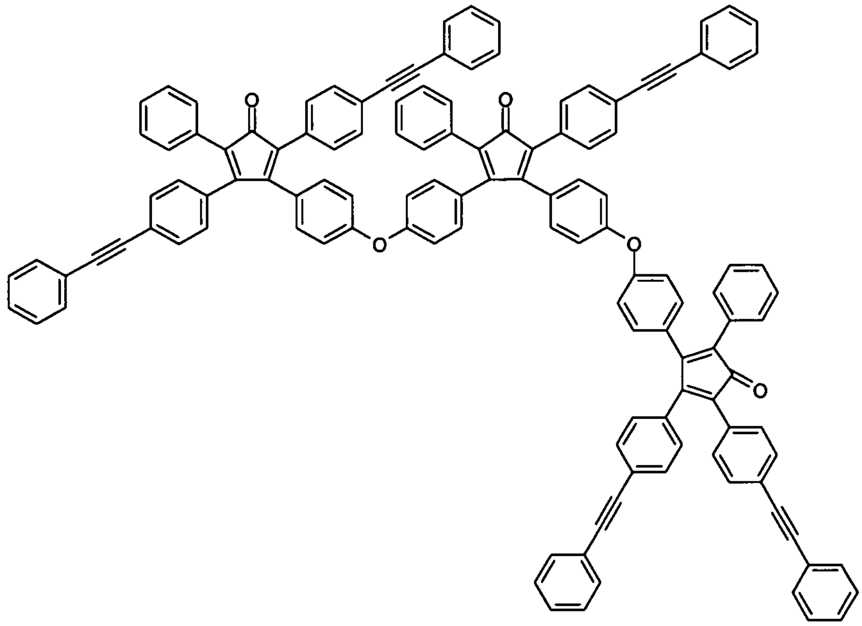

Formule XI :

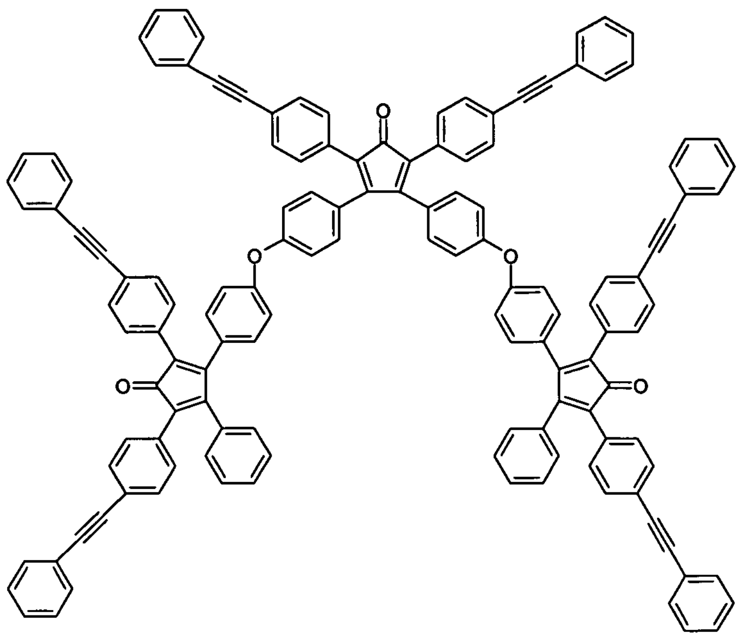

Formule XII :

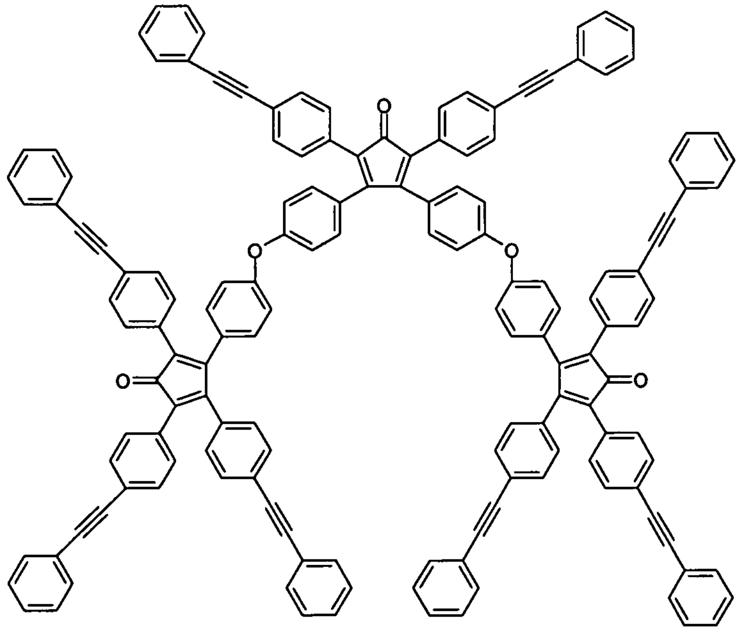

Formule XIII :

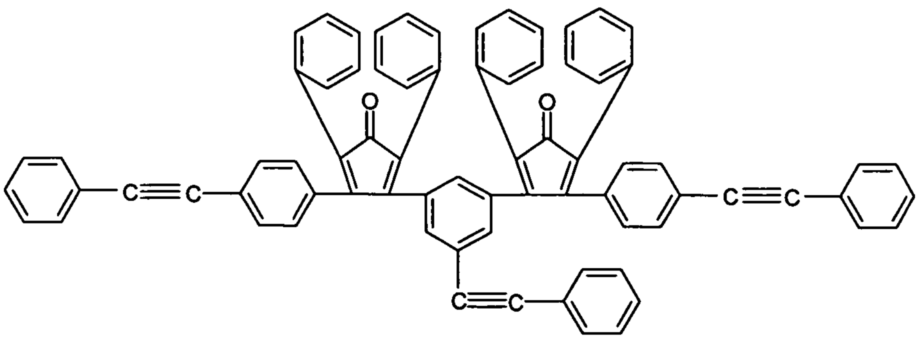

Formule XIV :

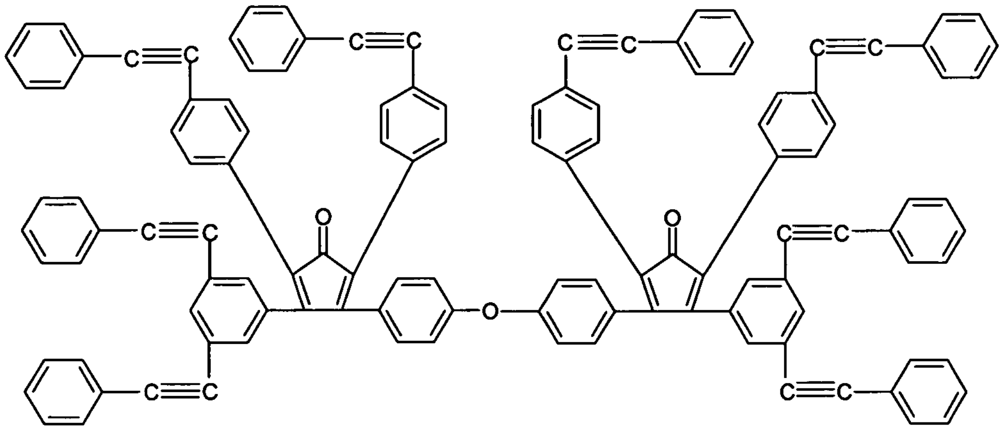

Formule XV :

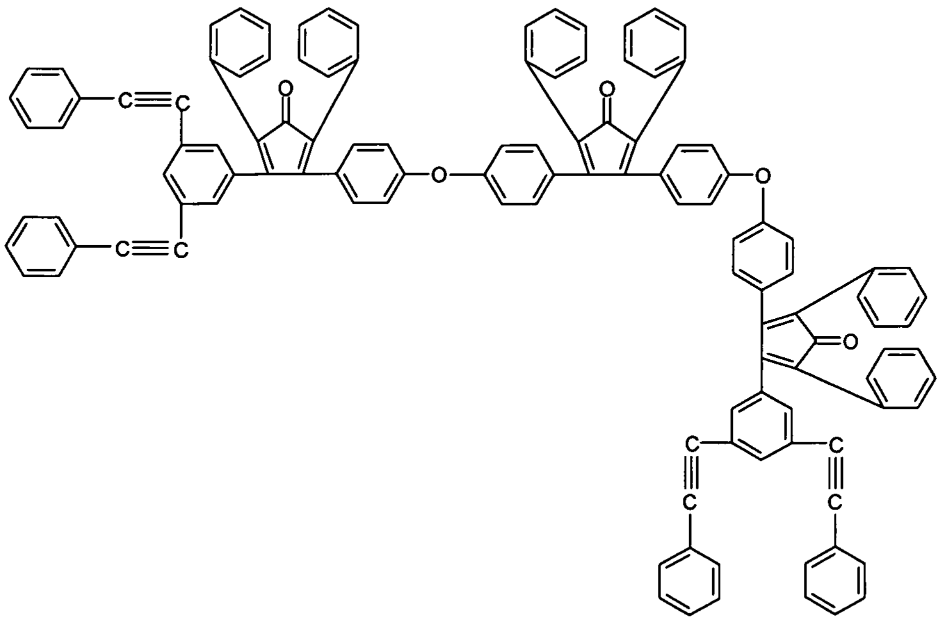

Formules XVI (en haut) et XVII (au milieu) :

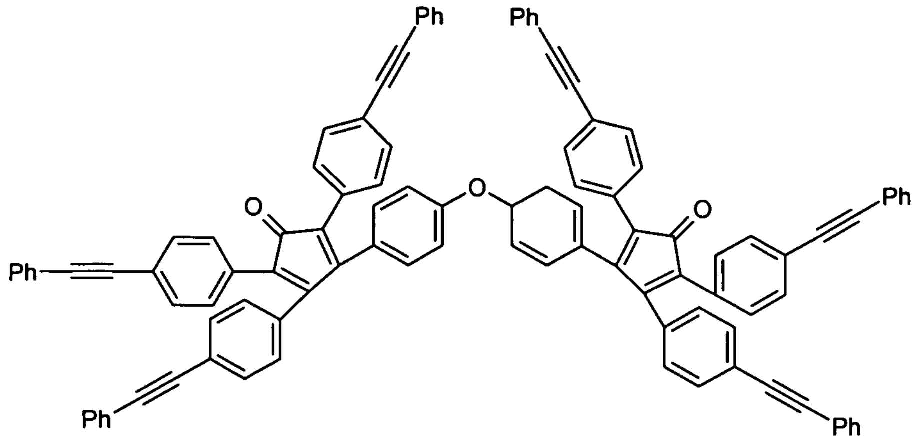

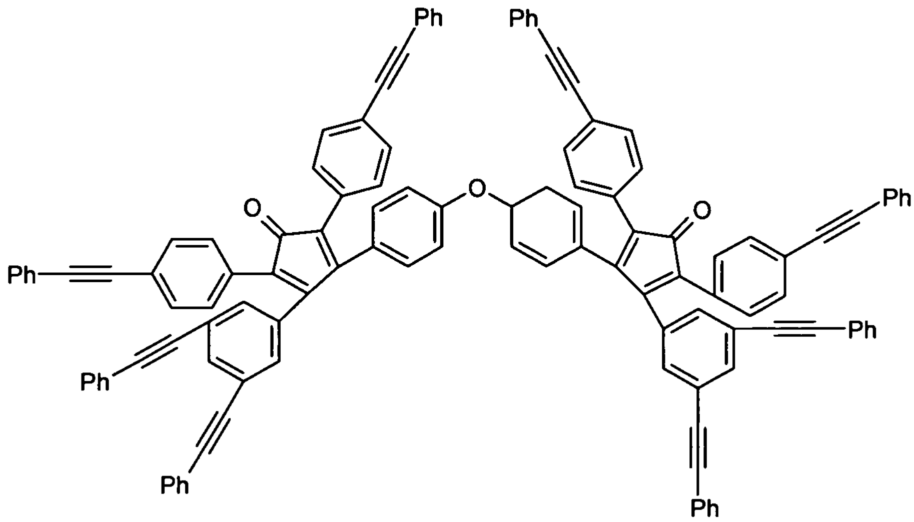

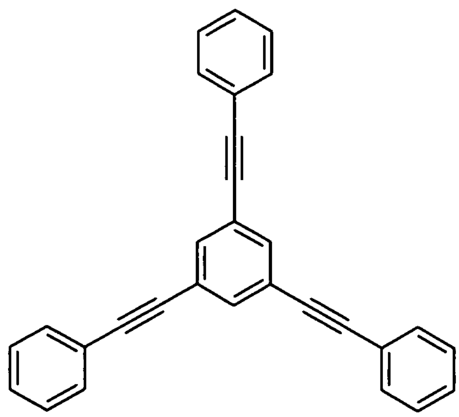

**9.** Procédé conforme à la revendication 1, dans lequel l'agent porogène est un polystyrène linéaire ou un copolymère linéaire de styrène et d'alpha-méthyl-styrène comportant jusqu'à 80 % en moles de motifs d'alpha-méthyl-styrène.

**10.** Procédé conforme à la revendication 1, dans lequel l'agent porogène est formé principalement d'un ou plusieurs des monomères suivants : styrène, styrènes à substituant(s) alkyle, styrènes à substituant(s) aryle, styrènes à substituants aryl-alcynyle et alkyle, 4-(phényl-éthynyl)-styrène, styrènes à substituant(s) phénoxy, alcoxy, carboxy, hydroxy, ou alcanoyle et aroyle, vinyl-naphtalène, vinyl-anthracène, stilbène, acrylates et méthacrylates, et oxydes d'alkylène.

**11.** Procédé conforme à la revendication 1, dans lequel le précurseur de matrice est un oligomère formé à partir du monomère de formule 1 :

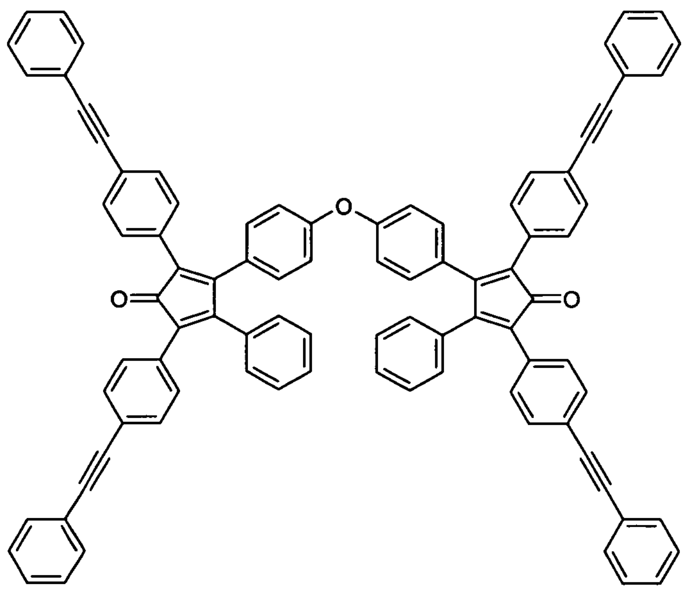

et l'agent porogène est un oligomère styrénique linéaire dont la masse molaire est inférieure ou égale à 2000 g/mol, et cet agent porogène se trouve présent en une quantité représentant de 30 à 45 % du poids de la matrice et de l'agent porogène.

**12.** Procédé conforme à la revendication 11, dans lequel l'agent porogène est un polystyrène linéaire.

**13.** Procédé conforme à la revendication 11, dans lequel l'agent porogène est un copolymère linéaire de styrène et d'alpha-méthyl-styrène comportant jusqu'à 80 % en moles de motifs d'alpha-méthyl-styrène.

Fig. 1

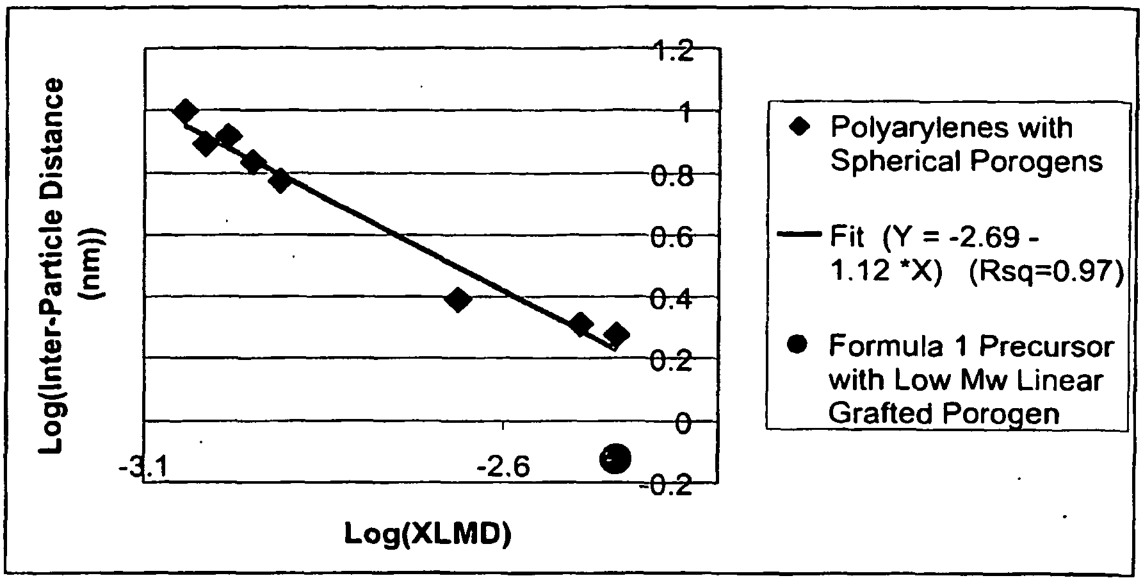
Log(Inter-Particle Distance (nm))
1.2
1
0.8
0.6
0.4
0.2
0
-0.2
-3.1
-2.6
Log(XLMD)
Polyarylenes with Spherical Porogens
Fit (Y = -2.69 - 1.12 *X) (Rsq=0.97)
Formula 1 Precursor with Low Mw Linear Grafted Porogen

Fig. 2

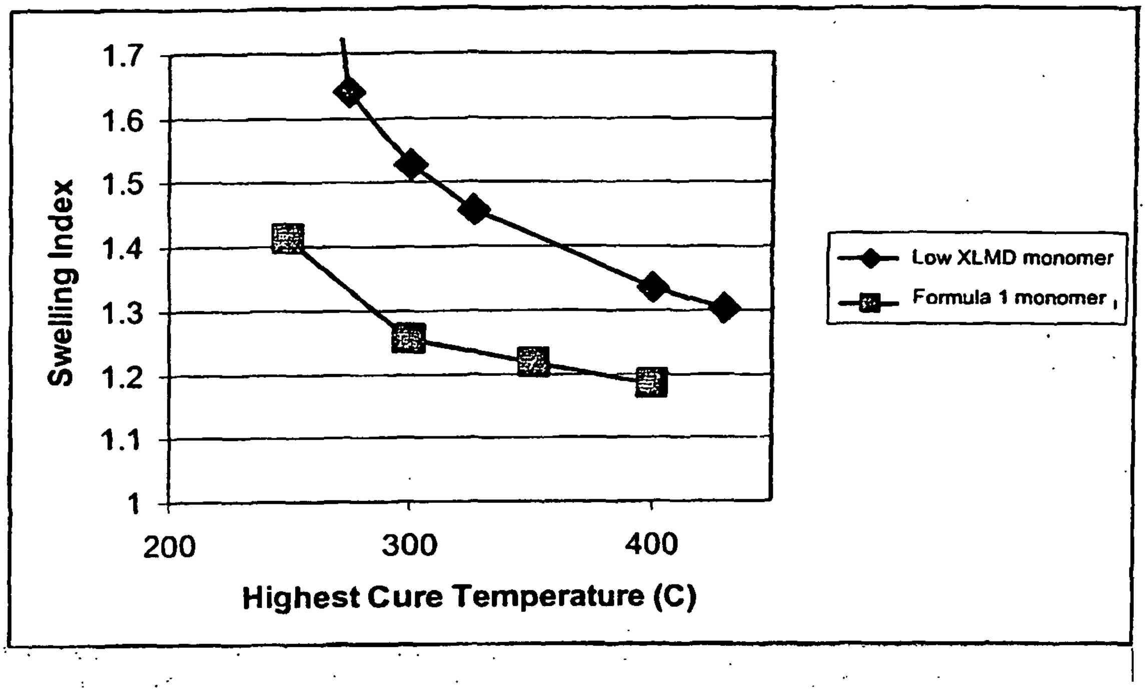
1.7
1.6
1.5
1.4
1.3
1.2
1.1
1
Swelling Index
200
300
400
Highest Cure Temperature (C)
Low XLMD monomer
Formula 1 monomer

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6093636 A
- US 6630520 B
- US 6156812 A
- US 6172128 B
- US 6313185 B
- US 6420441 B
- WO 03068825 A
- US 20030006477 A


### Non-patent literature cited in the description


- **Brunner-Popela ; J. and Glatter, O.** *J. Applied Cryst.,* 1997, vol. 30, 431-442
- **Weyerich, B. ; Brunner-Popela, J. ; Glatter, O.** *J. Applied Cryst.,* 1999, vol. 32, 197-209
- **Pederson, J. S.** *J. Appl. Cryst.,* 1994, vol. 27, 595